# EUROPEAN PATENT APPLICATION

(11) **EP 4 246 701 A1**
(43) Date of publication of application: **20.09.2023**
(21) Application number: 21909148.5
(22) Date of filing: 08.12.2021
(51) Int. Cl.: H01M 50/463, H01M 50/411

(54) **BATTERY, ELECTRONIC DEVICE, AND MOBILE APPARATUS**

(30) Priority: 22.12.2020 CN 202011530559
(71) Applicant: Huawei Technologies Co., Ltd., Shenzhen, Guangdong 518129 (CN)
(72) Inventor: DENG, Yaoming, Shenzhen, Guangdong 518129 (CN); LI, Zhengjie, Shenzhen, Guangdong 518129 (CN); YANG, Dongfang, Shenzhen, Guangdong 518129 (CN); ZHANG, Xinzhi, Shenzhen, Guangdong 518129 (CN); GAO, Yunlei, Shenzhen, Guangdong 518129 (CN); XIE, Fengchao, Shenzhen, Guangdong 518129 (CN)
(74) Representative: Körber, Martin Hans
(86) International application number: PCT/CN2021/136374
(87) International publication number: WO 2022/135151

(57) **Abstract**

This application provides a battery, including: a first base separator and a second base separator that are located on two sides of an electrode plate and that are adjacent to each other, and a first-type separator coating layer that is adhered to an edge region of the first base separator and an edge region of the second base separator. This application further provides a battery, including: a second-type separator coating layer adhered to a middle region of a base separator, and a third-type separator coating layer adhered to an edge region of a first base separator, where the second-type separator coating layer includes an adhesive polymer with a first mass content, the third-type separator coating layer includes an adhesive polymer with a second mass content, and the second mass content is greater than the first mass content. This application provides a battery, an electronic device, and a mobile apparatus, to reduce a possibility of a short circuit between a positive electrode plate and a negative electrode plate.

## Description

This application claims priority to Chinese Patent Application No. 202011530559.7, filed with the China National Intellectual Property Administration on December 22, 2020 and entitled "BATTERY, ELECTRONIC DEVICE, AND MOBILE APPARATUS", which is incorporated herein by reference in its entirety.

### TECHNICAL FIELD

This application relates to the field of battery technologies, and in particular, to a battery, an electronic device, and a mobile apparatus.

### BACKGROUND

Batteries are currently commercialized and widely used secondary power supplies. In the battery, a separator is a porous and electrochemically inert medium between a positive electrode plate and a negative electrode plate, and does not participate in an electrochemical reaction, but is crucial to safety performance of the battery. If the battery is in a mechanical abuse or heat abuse state, an edge of the separator may shrink, which increases a possibility of a short circuit between the positive electrode plate and the negative electrode plate, and is even very prone to cause thermal runaway in a serious case.

### SUMMARY

This application provides a battery, an electronic device, and a mobile apparatus, to reduce a possibility of a short circuit between a positive electrode plate and a negative electrode plate.

According to a first aspect, a battery is provided, including:
a first electrode plate;
a first base separator and a second base separator, where the first base separator and the second base separator are two base separators adjacent to the first electrode plate, and the first base separator and the second base separator are respectively located on two sides of the first electrode plate; and
a first-type separator coating layer, where the first-type separator coating layer is adhered to a first edge region of the first base separator and is adhered to a second edge region of the second base separator, the first edge region and the second edge region are located on a same side of the battery, and the first edge region and the second edge region are disposed opposite to each other.

Optionally, the first-type separator coating layer has adhesion and high-temperature meltability.

It should be understood that "disposed opposite to each other" may be understood as "disposed face to face".

In this application, the first-type separator coating layer is disposed between two adjacent base separators, so that a side that is of the electrode plate and that is close to the separator coating layer can be surrounded by the base separator, the first-type separator coating layer, and the base separator. In other words, one end of the electrode plate can be closed by a separator. This helps reduce a possibility of a short circuit between a positive electrode plate and a negative electrode plate.

In addition, the first-type separator coating layer is disposed in the edge region of the base separator, which helps improve tightness of bonding between the separator and the electrode plate, thereby reducing a risk of lithium ion precipitation. Moreover, the first-type separator coating layer is disposed in the edge region of the base separator, which not only helps improve overall hot pressing uniformity of an electrode, but also helps improve bonding force between the electrode plate and the separator, thereby helping improve cycle performance of the battery. In addition, in a heat abuse scenario or the like, due to an effect of adhesive force, it is more difficult for the separator to shrink, thereby helping reduce a deformation amount of a cell.

With reference to the first aspect, in some implementations of the first aspect, the first-type separator coating layer is further adhered to a side edge of the first electrode plate.

In this application, if the first-type separator coating layer is adhered to a side edge of the electrode plate, it is helpful to improve tightness of bonding between the separator coating layer and the electrode plate, thereby reducing a risk of lithium ion precipitation.

If the first-type separator coating layer is not adhered to the side edge of the electrode plate, it is helpful to provide a margin for shrinkage of the base separator.

With reference to the first aspect, in some implementations of the first aspect, the battery further includes a second electrode plate and a third base separator; both the second base separator and the third base separator are adjacent to the second electrode plate; the second base separator is located between the first base separator and the third base separator; the first-type separator coating layer is further adhered to a third edge region of the second base separator, a side edge of the second base separator, and a fourth edge region of the third base separator; the side edge of the second base separator connects the second edge region and the third edge region; and the third edge region and the fourth edge region are disposed opposite to each other and are located on a same side of the battery.

With reference to the first aspect, in some implementations of the first aspect, the battery further includes a third electrode plate, a fourth base separator, and a fifth base separator; both the fourth base separator and the fifth base separator are adjacent to the third electrode plate; the second base separator is located between the first base separator and the fourth base separator, and the fourth base separator is located between the second base separator and the fifth base separator; the first-type separator coating layer is further adhered to a side edge of the second base separator, a side edge of the fourth base separator, a fifth edge region of the fourth base separator, and a sixth edge region of the fifth base separator; the second edge region, the side edge of the second base separator, the side edge of the fourth base separator, the fifth edge region, and the sixth edge region are all located on a same side of the battery; and the fifth edge region and the sixth edge region are disposed opposite to each other.

In this application, the first-type separator coating layer spans a plurality of base separators, and is fused together at edges of the plurality of base separators, thereby helping improve closure of the electrode plate and helping significantly reduce a possibility of a short circuit between a positive electrode plate and a negative electrode plate.

With reference to the first aspect, in some implementations of the first aspect, the battery further includes a second-type separator coating layer, the second-type separator coating layer is adhered to a middle region of the first base separator, the first-type separator coating layer is connected to the second-type separator coating layer, the second-type separator coating layer includes an adhesive polymer with a first mass content, and the first-type separator coating layer includes an adhesive polymer with a second mass content, where the second mass content is greater than the first mass content.

In this application, because the third-type separator coating layer has more adhesive polymers, the third-type separator coating layer can be filled between the second-type separator coating layer and the electrode plate, to further improve tightness of bonding between a separator and the electrode plate, thereby reducing a risk of lithium ion precipitation.

In addition, an adhesive polymer with a higher mass content is disposed in the edge region of the base separator, which helps improve a bonding capability of the base separator in the edge region, and helps improve bonding force between the electrode plate and the separator, thereby helping improve cycle performance of the battery and improve cell deformation. Moreover, due to different contents, the adhesive polymer in the edge region may have a higher thickness, which helps improve overall hot pressing uniformity of an electrode.

With reference to the first aspect, in some implementations of the first aspect, the second mass content is 0.4 g/m² to 5 g/m².

With reference to the first aspect, in some implementations of the first aspect, a difference between the second mass content and the first mass content is 0.05 g/m² to 4.5 g/m².

With reference to the first aspect, in some implementations of the first aspect, the adhesive polymer includes at least one of the following: polyvinylidene difluoride, polyhexafluoropropylene, a vinylidene fluoride-hexafluoropropylene copolymer, a vinylidene fluoride-trichloroethylene copolymer, a polyethylene-vinyl acetate copolymer, sodium carboxymethyl cellulose, styrene-butadiene rubber, polyacrylic acid, polyacrylic acid salt, polyacrylate, polyacrylonitrile, polyamide, polyimide, polyethylene oxide, cellulose acetate, cellulose acetate butyrate, cellulose acetate propionate, polyvinylpyrrolidone, polyvinyl acetate, polyvinylether, polymethyl methacrylate, and polytetrafluoroethylene.

With reference to the first aspect, in some implementations of the first aspect, the battery further includes an electrolyte, a solubility parameter of the first-type separator coating layer is a first solubility parameter, a solubility parameter of the electrolyte is a second solubility parameter, the first solubility parameter is less than or equal to the second solubility parameter, and a difference between the second solubility parameter and the first solubility parameter is less than a preset solubility parameter.

In this application, solubility of the separator coating layer and solubility of the electrolyte are properly set, which helps control compatibility of separator coating layers in the electrolyte, to control a form of the separator coating layer in the electrolyte, thereby helping separator coating layers that are disposed face to face fuse with each other to form the first-type separator coating layer. In addition, the solubility of the separator coating layer and the solubility of the electrolyte are properly set, which further helps improve adhesion between electrode plates, thereby helping improve dynamics performance of the battery and reduce polarization between batteries.

With reference to the first aspect, in some implementations of the first aspect, the preset solubility parameter is less than or equal to 5 (J/cm³)^{0.5}.

With reference to the first aspect, in some implementations of the first aspect, a width of the first-type separator coating layer is 0.1% to 45% of a width of the first electrode plate.

According to a second aspect, a battery is provided, including:
a first base separator;
a second-type separator coating layer, where the second-type separator coating layer is adhered to a middle region of the first base separator, and the second-type separator coating layer includes an adhesive polymer with a first mass content; and
a third-type separator coating layer, where the third-type separator coating layer is adhered to an edge region of the first base separator, the third-type separator coating layer is connected to the second-type separator coating layer, the third-type separator coating layer includes an adhesive polymer with a second mass content, and the second mass content is greater than the first mass content.

In this application, because the third-type separator coating layer has more adhesive polymers, the third-type separator coating layer can be filled between the second-type separator coating layer and the electrode plate, to further improve tightness of bonding between a separator and the electrode plate, thereby reducing a risk of lithium ion precipitation.

In addition, an adhesive polymer with a higher mass content is disposed in the edge region of the base separator, which helps improve a bonding capability of the base separator in the edge region, and helps improve bonding force between the electrode plate and the separator, thereby helping improve cycle performance of the battery and improve cell deformation. Moreover, due to different contents, the adhesive polymer in the edge region may have a higher thickness, which helps improve overall hot pressing uniformity of an electrode.

With reference to the second aspect, in some implementations of the second aspect, a thickness of the second-type separator coating layer is less than or equal to a minimum thickness of the third-type separator coating layer.

With reference to the second aspect, in some implementations of the second aspect, the second mass content is 0.4 g/m² to 5 g/m².

With reference to the second aspect, in some implementations of the second aspect, a difference between the second mass content and the first mass content is 0.05 g/m² to 4.5 g/m².

With reference to the second aspect, in some implementations of the second aspect, the battery further includes an electrolyte, a solubility parameter of the third-type separator coating layer is a first solubility parameter, a solubility parameter of the electrolyte is a second solubility parameter, the first solubility parameter is less than or equal to the second solubility parameter, and a difference between the second solubility parameter and the first solubility parameter is less than a preset solubility parameter.

In this application, solubility of the separator coating layer and solubility of the electrolyte are properly set, which helps control compatibility of separator coating layers in the electrolyte, to control a form of the separator coating layer in the electrolyte, thereby helping separator coating layers that are disposed face to face fuse with each other to form the first-type separator coating layer. In addition, the solubility of the separator coating layer and the solubility of the electrolyte are properly set, which further helps improve adhesion between electrode plates, thereby helping improve dynamics performance of the battery and reduce polarization between batteries.

With reference to the second aspect, in some implementations of the second aspect, the preset solubility parameter is less than or equal to 5 (J/cm³)^{0.5}.

With reference to the second aspect, in some implementations of the second aspect, the battery further includes an electrode plate, and a width of the third-type separator coating layer is 0.1% to 45% of a width of the electrode plate.

With reference to the second aspect, in some implementations of the second aspect, the adhesive polymer includes at least one of the following: polyvinylidene difluoride, polyhexafluoropropylene, a vinylidene fluoride-hexafluoropropylene copolymer, a vinylidene fluoride-trichloroethylene copolymer, a polyethylene-vinyl acetate copolymer, sodium carboxymethyl cellulose, styrene-butadiene rubber, polyacrylic acid, polyacrylic acid salt, polyacrylate, polyacrylonitrile, polyamide, polyimide, polyethylene oxide, cellulose acetate, cellulose acetate butyrate, cellulose acetate propionate, polyvinylpyrrolidone, polyvinyl acetate, polyvinylether, polymethyl methacrylate, and polytetrafluoroethylene.

According to a third aspect, an electronic device is provided, including the battery according to any one of the implementations of the first aspect and the second aspect.

According to a fourth aspect, a mobile apparatus is provided, including the battery according to any one of the implementations of the first aspect and the second aspect.

### BRIEF DESCRIPTION OF DRAWINGS

FIG. 1 is a schematic diagram of a structure of an electronic device;
FIG. 2 is a diagram of a working principle of a battery;
FIG. 3 is a schematic diagram of a structure of a battery;
FIG. 4 is a schematic diagram of a structure of a battery according to an embodiment of this application;
FIG. 5 is a schematic diagram of structures of a middle region and an edge region;
FIG. 6 is a schematic diagram of a structure of processing a battery by using a hot pressing process according to an embodiment of this application;
FIG. 7 is a schematic diagram of a structure of a battery according to an embodiment of this application;
FIG. 8 is a schematic diagram of a structure of a battery according to an embodiment of this application;
FIG. 9 is a schematic diagram of a structure of a battery according to an embodiment of this application;
FIG. 10 is a schematic diagram of another structure of processing a battery by using a hot pressing process according to an embodiment of this application;
FIG. 11 is a schematic diagram of still another structure of processing a battery by using a hot pressing process according to an embodiment of this application;
FIG. 12 is a schematic diagram of a structure of a battery according to an embodiment of this application;
FIG. 13 is a schematic diagram of a structure of a battery according to an embodiment of this application;
FIG. 14 is a schematic diagram of a structure of processing a battery by using a hot pressing process according to an embodiment of this application; and
FIG. 15 is a schematic diagram of a structure of a battery according to an embodiment of this application.

### DESCRIPTION OF EMBODIMENTS

The following describes the technical solutions in this application with reference to the accompanying drawings.

Before the embodiments of this application are described, technical terms appeared in this application are first described.

A primary cell (primary Cell) may be an apparatus that converts chemical energy into electric energy. The primary cell uses an electric potential difference between a positive electrode and a negative electrode to enable an electron to flow between the positive electrode and the negative electrode.

A positive electrode (cathode) may be an electrode with a higher electric potential in electrodes in a primary cell. In a discharging processing, a current may flow out from the positive electrode, and the positive electrode may obtain an electron and have a reduction function. In a charging process, a current may flow to the positive electrode, and the positive electrode may lose an electron and have an oxidation function.

A negative electrode (anode) may be an electrode with a lower electric potential in electrodes in a primary cell. In a discharging process, a current may flow to the negative electrode, and the negative electrode may lose an electron and have an oxidation function. In a charging process, a current may flow out from the negative electrode, and the negative electrode may obtain an electron and have a reduction function.

An electrolyte (electrolyte) may be a medium used to provide ion exchange between a positive electrode and a negative electrode of a battery.

A separator (separator) may be a medium used to separate a positive electrode plate from a negative electrode plate to prevent a short circuit caused by direct contact between the positive electrode plate and the negative electrode plate. Basic features of the separator are porosity (which may provide a channel for ion transmission) and insulation (which prevents leakage of electricity). The separator may include a base separator and a separator coating layer.

A base separator (base separator) may be a microporous film part in a separator. The base separator may be used separately in a cell. The base separator may provide the porosity and the insulation.

A separator coating layer (separator coating layer) may be a thin layer attached to at least one surface of a base separator. The separator coating layer may be attached to the base separator through adhering. The separator coating layer may be used to enhance performance of a separator, for example, to improve heat resistance, adhesion, and the like of the separator.

A cell (core or cell) may be a part that has a power storage function in a battery. The cell may include a positive electrode plate and a negative electrode plate.

Heat abuse (heat abuse) may be abuse of a cell in a heat aspect (or at a high temperature). A hot box may be used to perform a heat abuse-related test on the cell (for example, baking the cell at a high temperature (≥130°C)).

Mechanical abuse (mechanical abuse) may be abuse of a cell in a mechanical aspect. A mechanical abuse-related test may be performed on the cell by using a nail penetration (or nail penetration) test, an impact test, or the like.

A heat shrinkage (heat shrinkage) rate may be a size change rate of a separator before and after heating in a machine/transverse direction (where the machine direction MD is a direction along a long edge of the separator, and the transverse direction TD is perpendicular to MD, that is, a direction along a short edge of the separator). A method for testing the heat shrinkage rate may include the following: A size of the separator in the machine/transverse direction (MD/TD) is measured; the separator with a specific size in the machine/transverse (MD/TD) direction is placed in a constant-temperature chamber; the constant-temperature chamber is heated to a specific temperature; and a size of the separator in the machine/transverse (MD/TD) direction after heating is measured.

A mass content may be mass of a substance per unit area.

A solubility parameter (solubility parameter, SP) may be a physical constant of miscibility of a liquid material, and may be calculated by using the following formula: SP=(E/V)^{1/2}, where E is cohesive energy, V is a volume, and E/V is cohesive energy density.

The solutions provided in the embodiments of this application may be further applied to an electronic device or a mobile apparatus.

The electronic device may be, for example, a terminal consumer product or a 3C electronic product (a computer (computer), communication (communication), or consumer (consumer) electronic product), for example, a device such as a mobile phone, a mobile power supply, a portable computer, a tablet computer, an e-reader, a notebook computer, a digital camera, a wearable device, an in-vehicle terminal, or a headset.

The mobile apparatus may be, for example, a vehicle, an electric skateboard, an electric bicycle, or the like.

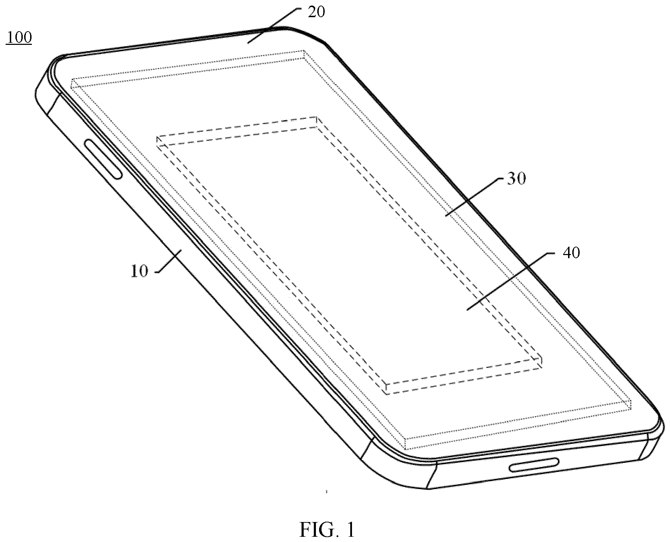

FIG. 1 is a schematic diagram of a structure of an electronic device 100 according to an embodiment of this application. The embodiment shown in FIG. 1 is described by using an example in which the electronic device 100 is a mobile phone.

The electronic device 100 includes a housing 10, a display screen 20, and a circuit board assembly 30. Specifically, the housing 10 includes a frame and a rear cover. The frame surrounds a periphery of the display screen 20 and surrounds a periphery of the rear cover. A cavity formed by the display screen 20, the frame, and the rear cover may be used to place the circuit board assembly 30. In an example, both the display screen 20 and the circuit board assembly 30 can be disposed on the housing 10. The electronic device 100 may further include a battery 40 configured to supply power to the circuit board assembly 30. The battery 40 may be, for example, a lithium-electron secondary battery, a sodium-ion secondary battery, a potassium-ion secondary battery, a magnesium-ion secondary battery, a zinc-ion secondary battery, or an aluminum-ion secondary battery.

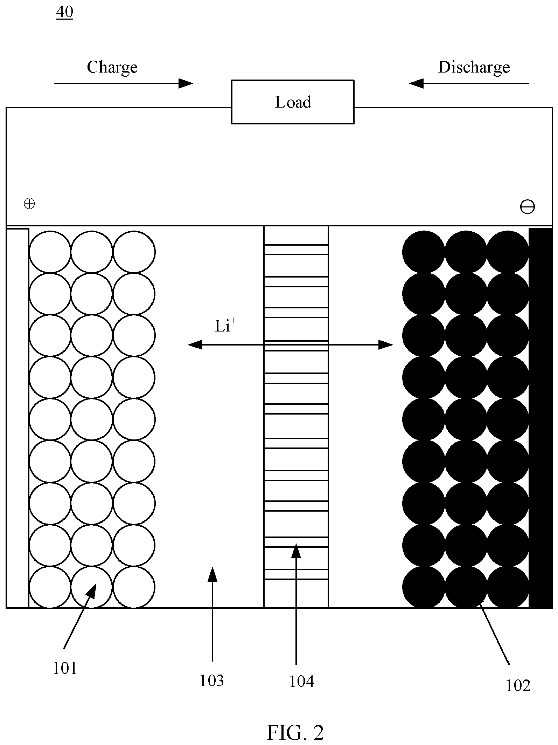

FIG. 2 is a diagram of a working principle of a battery 40. Core components of the battery 40 may include a positive electrode plate 101, a negative electrode plate 102, an electrolyte 103, and a separator 104 (corresponding auxiliary parts for connection, loops, and the like are not shown). The positive electrode plate 101 and the negative electrode plate 102 may deintercalate a lithium ion to store and release energy. As shown in FIG. 2, that Li+ moves to the left (positive electrode) is an energy release process, and that Li+ moves to the right (negative electrode) is an energy storage process. The electrolyte 103 may be a transmission carrier of a lithium ion between the positive electrode plate 101 and the negative electrode plate 102. The positive electrode plate 101 and the negative electrode plate 102 are main energy storage parts of the battery 40, and may reflect energy density, cycle performance, and safety performance of a cell. A lithium ion can pass through the separator 104, but the separator 104 is not conductive. Therefore, the separator 104 can separate the positive electrode plate 101 from the negative electrode plate 102 to prevent a short circuit between the positive electrode plate 101 and the negative electrode plate 102. Basic features of the separator 104 are porosity (which may provide a channel for ion transmission) and insulation (which prevents leakage of electricity).

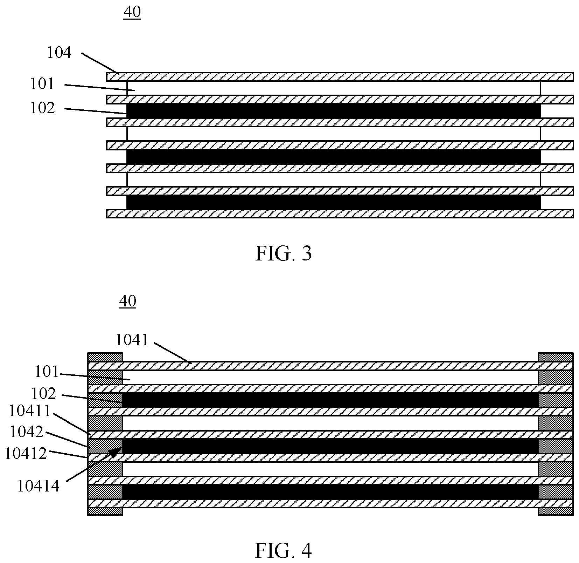

FIG. 3 is a schematic diagram of a structure of a battery 40. The battery 40 may include a plurality of layers of positive electrode plates 101, a plurality of layers of negative electrode plates 102, and a plurality of layers of separators 104. The positive electrode plates 101 and the negative electrode plates 102 are stacked at intervals. A layer of negative electrode plate 102 is disposed between two adjacent positive electrode plates 101, and a layer of positive electrode plate 101 is disposed between two adjacent negative electrode plates 102. In addition, a separator 104 is disposed between a positive electrode plate 101 and a negative electrode plate 102 that are adjacent to prevent a short circuit between the positive electrode plate 101 and the negative electrode plate 102. The plurality of layers of positive electrode plates 101, the plurality of layers of negative electrode plates 102, and the plurality of layers of separator 104 may be soaked in the electrolyte 103 shown in FIG. 2.

The positive electrode plate 101 may include a positive electrode current collector and a positive electrode active material disposed on the positive electrode current collector. The positive electrode active material includes but is not limited to a composite metal oxide of lithium (such as a lithium cobalt oxide (LCO) or a lithium nickel cobalt manganese oxide (NMC)), a polyanion lithium compound LiMx(PO4)y (where M is Ni, Co, Mn, Fe, Ti, or V, 0≤x≤5, and 0≤y≤5), and the like.

In an example, a method for manufacturing a positive electrode plate may include the following: First, an adhesive (for example, polyvinylidene difluoride (polyvinylidene difluoride, PVDF)) is dissolved in N-methyl-2-pyrrolidone (N-methyl-2-pyrrolidone, NMP) to obtain a 7.0% PVDF binder solution. Then, carbon nanotube (CNTs) conductive liquid is added and uniformly dispersed. Afterwards, an active material lithium cobalt oxide (LCO) is added and uniformly stirred and mixed to form a positive electrode slurry. Further, the positive electrode slurry is uniformly coated on two sides of an aluminum foil by using a coating device, and is dried by using a laboratory oven to remove an NMP solvent. Finally, a coated electrode plate undergoes processes such as cold pressing, stripping, and tab welding to obtain a finished positive electrode plate. A positive electrode ratio may be, for example, LCO:CNTs:PVDF is 98.8%:0.02%:1.0%.

In another example, a method for manufacturing a positive electrode plate may include the following: First, an adhesive (for example, polyvinylidene difluoride (polyvinylidene difluoride, PVDF)) is dissolved in N-methyl-2-pyrrolidone (N-methyl-2-pyrrolidone, NMP) to obtain a 7.0% PVDF binder solution. Then, carbon nanotube (CNTs) conductive liquid is added and uniformly dispersed. Afterwards, an active material lithium nickel cobalt manganese oxide (NMC) is added and uniformly stirred and mixed to form a positive electrode slurry. Further, the positive electrode slurry is uniformly coated on two sides of an aluminum foil by using a coating device, and is dried by using a laboratory oven to remove an NMP solvent. Finally, a coated electrode plate undergoes processes such as cold pressing, stripping, and tab welding to obtain a finished positive electrode plate. A positive electrode ratio may be, for example, NMC:CNTs:SP:PVDF is 97.5%:0.5%: 1.0%: 1.0%.

The negative electrode plate 102 may include a negative electrode current collector and a negative electrode active material disposed on the negative electrode current collector. The negative electrode active material includes but is not limited to at least one of the following: lithium metal, lithium alloy, lithium titanate, natural graphite, artificial graphite, MCMB, amorphous carbon, a carbon fiber, a carbon nanotube, hard carbon, soft carbon, graphene, graphene oxide, silicon, a silicon-carbon compound, a silicon-oxygen compound, and a silicon metal compound.

In an example, a method for manufacturing a negative electrode plate may include the following: First, dry blending is performed on artificial graphite and conductive carbon black (SP) through kneading to make artificial graphite and conductive carbon black uniform. Then, a 25% pre-stirred sodium alginate (CMC) binder solution is added to be kneaded and mixed. Afterwards, remaining CMC and deionized water are added for high-speed dispersion, to form a mixed negative electrode slurry. Further, a sieved mixed negative electrode slurry is uniformly coated on two sides of a copper foil by using a coating device, and is dried by using a laboratory oven. Finally, a coated electrode plate undergoes processes such as cold pressing, stripping, and tab welding to obtain a finished negative electrode plate. A negative electrode ratio may be, for example, graphite:SP: CMC:styrene-butadiene rubber (SBR) is 96.8%:0.6%:1.2%1.2%.

The separator 104 may include, for example, a base separator and a separator coating layer.

The base separator may be a porous insulating material. A lithium ion can pass through a hole on the base separator (the hole on the base separator may be a transmission channel of the lithium ion). As a main component of the separator 104, the base separator needs to have performance such as chemical inertness, electrochemical inertness, porosity, electronic insulation, high ductility and malleability, a high film breaking temperature, and a low hole closing temperature.

The base separator may include, for example, at least one of the following: polyethylene (polyethylene, PE), polyethylene (polypropylene, PP), poly-alpha olefin, polyethylene terephthalate, polymethylpentene, polybutene, polyimide, polyamide, polyester, polyurethane, polycarbonate, a cyclic olefin copolymer, polybenzimidazole, poly benzobisoxazole, an aramid fiber, and the like. A polymer form of the base separator may include, for example, one or more of a copolymer, a blend, a mixture, and a combination.

The separator coating layer may be attached to at least one surface of the base separator, so that the separator 104 has performance such as high ductility and malleability, a high film breaking temperature, and a low hole closing temperature. In addition, the separator coating layer may further have other performance, for example, having high adhesion. The separator coating layer may include an organic coating layer, an inorganic coating layer, and/or an organic-inorganic composite coating layer.

The inorganic coating layer may include a ceramic coating layer. The ceramic coating layer may include at least one of the following: aluminum oxide, silicon oxide, titanium oxide, zirconium oxide, zinc oxide, barium oxide, magnesium oxide, beryllium oxide, calcium oxide, thorium oxide, aluminum nitride, titanium nitride, aluminum hydroxide oxide, boehmite, apatite, aluminum hydroxide, magnesium hydroxide, barium sulfate, boron nitride, silicon carbide, silicon nitride, cubic boron nitride, hexagonal boron nitride, graphite, graphene, a mesoporous molecular sieve (MCM-41, SBA-15), and the like.

The organic coating layer may include at least one of the following: polyvinylidene difluoride, polyhexafluoropropylene, a vinylidene fluoride-hexafluoropropylene copolymer, a vinylidene fluoride-trichloroethylene copolymer, a polyethylene-vinyl acetate copolymer, sodium carboxymethyl cellulose, styrene-butadiene rubber, polyacrylic acid, polyacrylic acid salt, polyacrylate, polyacrylonitrile, polyamide, polyimide, polyethylene oxide, cellulose acetate, cellulose acetate butyrate, cellulose acetate propionate, polyvinylpyrrolidone, polyvinyl acetate, polyvinylether, polymethyl methacrylate, polytetrafluoroethylene, and the like.

The organic-inorganic composite coating layer may be manufactured by mixing the inorganic coating layer and the organic coating layer.

In a heat abuse scenario, an edge part of a separator tends to shrink towards a middle region of the separator. A manner of improving a shrinkage trend is to adhere a separator coating layer with adhesion to a surface of a base separator (for example, an edge region and/or a middle region of the base separator). The separator coating layer may be melted, cross-linked, and adhered to an electrode plate (for example, a positive electrode plate and/or a negative electrode plate) at a high temperature. This helps offset shrinkage force of the base separator, thereby helping reduce a possibility of a short circuit between the positive electrode plate and the negative electrode plate.

The market has an increasingly high requirement on battery energy density. A manner of improving the battery energy density is to compress a thickness of the separator. However, the thickness of the separator is small. As a result, the separator shrinks more easily, adhesive force of the separator is poorer, and a possibility of a short circuit between the positive electrode plate and the negative electrode plate cannot be effectively reduced.

FIG. 4 is a schematic diagram of a structure of a battery 40 according to an embodiment of this application.

The battery 40 may include a plurality of positive electrode plates 101, a plurality of negative electrode plates 102, and a plurality of base separators 1041 that are stacked and disposed at intervals. A white rectangle in FIG. 4 may be used to represent the positive electrode plate 101, a black rectangle in FIG. 4 may be used to represent the negative electrode plate 102, and a rectangle filled with slashes in FIG. 4 may be used to represent the base separator 1041. One negative electrode plate 102 is disposed between any two adjacent positive electrode plates 101, one positive electrode plate 101 is disposed between any two adjacent negative electrode plates 102, and one base separator 1041 is disposed between any adjacent positive electrode plate 101 and negative electrode plate 102. Optionally, in the example shown in FIG. 4, the base separator 1041 may be adhered between the positive electrode plate 101 and the negative electrode plate 102.

The battery 40 may further include a first-type separator coating layer 1042. The first-type separator coating layer 1042 may be sticky, and may be melted and cross-linked at a high temperature (in the battery field, a temperature greater than 40°C to 60°C may be understood as a high temperature). In other words, the first-type separator coating layer 1042 may include an adhesive polymer. In FIG. 4, a black pattern filled with white lattices is used to represent the first-type separator coating layer 1042. The first-type separator coating layer 1042 may be adhered to an edge region of the base separator 1041 (that is, a part or all of the first-type separator coating layer may be adhered to the edge region of the base separator 1041). In addition, the first-type separator coating layer 1042 may be adhered between a first base separator 10411 and a second base separator 10412, and the first base separator 10411 and the second base separator 10412 are adjacent to a same electrode plate. To be specific, the first-type separator coating layer 1042 is adhered to a first edge region of the first base separator 10411 and is adhered to a second edge region of the second base separator 10412. The first edge region and the second edge region are disposed opposite to each other, that is, the first edge region and the second edge region are located on a same side of the electrode plate. The first base separator 10411, the first-type separator coating layer 1042, and the second base separator 10412 may surround an edge of the electrode plate, and the electrode plate is located between the first base separator 10411 and the second base separator 10412.

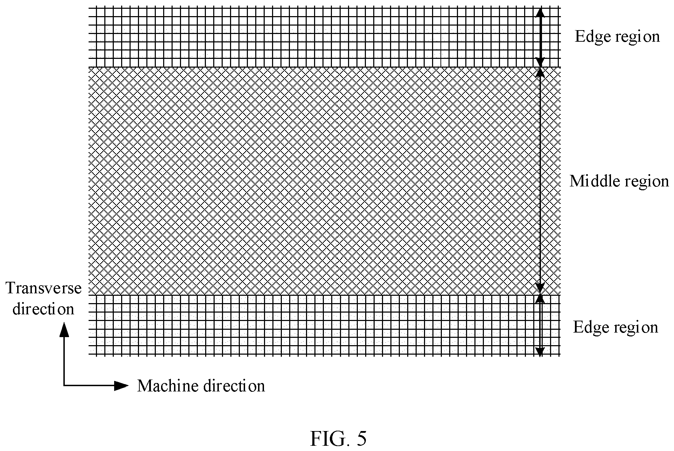

The following describes possible definitions of a middle region and an edge region with reference to FIG. 5. In FIG. 5, a pattern filled with squares is used to represent an edge region. In FIG. 5, a pattern filled with rhombuses is used to represent a middle region. It is assumed that a central axis of the battery 40 (or the electrode plate, the base separator 1041, or the like) in a transverse direction is a first central axis (the transverse direction TD may be understood as a width direction of the battery 40, a machine direction TD may be understood as a length direction of the battery 40, and a size of the battery 40 in the length direction is usually greater than a size of the battery 40 in the width direction). The middle region may be a region whose distance to the first central axis is shorter than a first preset distance. The edge region may be a region whose distance to the first central axis is longer than the first preset distance. A distance from a demarcation surface between the middle region and the edge region to the first central axis may be the first preset distance. For example, the first preset distance may be approximately 1/2 of a width of the electrode plate in the transverse direction.

In another example, it is assumed that a central axis of the battery 40 (or the electrode plate, the base separator 1041, or the like) in a machine direction is a second central axis. The middle region may be a region whose distance to the second central axis is shorter than a second preset distance. The edge region may be a region whose distance to the second central axis is longer than the second preset distance. A distance from a demarcation surface between the middle region and the edge region to the second central axis may be the second preset distance. For example, the second preset distance may be approximately 1/2 of a width of the electrode plate in the machine direction.

It should be understood that to effectively prevent a short circuit occurred between the positive electrode plate 101 and the negative electrode plate 102, the base separator 1041 usually covers an entire region of the electrode plate, and an edge of the base separator 1041 may exceed an edge contour of the electrode plate.

In an example, that the first-type separator coating layer 1042 is adhered to the edge region of the base separator 1041 may mean that the first-type separator coating layer 1042 is adhered to the base separator 1041, and the first-type separator coating layer 1042 includes a part located outside a periphery of the electrode plate, that is, the first-type separator coating layer 1042 includes a part that does not cover the periphery of the electrode plate.

In another example, that the first-type separator coating layer 1042 is adhered to the edge region of the base separator 1041 may mean that the first-type separator coating layer 1042 is adhered to the base separator 1041, and the first-type separator coating layer 1042 may include a first part covering a periphery of the electrode plate and a second part located outside the periphery of the electrode plate.

Optionally, a width of the first-type separator coating layer 1042 may be 0.1% to 45% of a width of the electrode plate.

Optionally, a width of the first-type separator coating layer 1042 may be 0.5% to 5.0% of a width of the electrode plate.

Optionally, the first-type separator coating layer 1042 includes an adhesive polymer with a mass content of 0.4 g/m² to 5 g/m².

In an example, the first-type separator coating layer 1042 may include an adhesive polymer with a mass content of 0.5 g/m². A method for configuring a slurry for the first-type separator coating layer 1042 may include the following: A raw material of the coating layer is obtained based on a mass proportion, where a polytetrafluoroethylene copolymer occupies 47.5 portions, deionized water occupies 50 portions, a water-based wetting agent occupies 1.0 portion, and a water-based dispersant occupies 1.5 portions. Then, the polytetrafluoroethylene copolymer is added to the deionized water to disperse at a high speed in a high-speed dispersing machine, to obtain slurry dispersing liquid, where a specific rotation speed may be, for example, 15000 r/min, and dispersing duration may be, for example, 2h. Afterwards, the completely dissolved water-based dispersant and water-based wetting agent are added and are fully stirred and ground, where stirring and grinding duration may be, for example, 3h. Finally, vacuumization and defoaming are performed to obtain a uniformly mixed slurry for the first-type separator coating layer 1042.

In another example, the first-type separator coating layer 1042 may include an adhesive polymer with a mass content of 0.62 g/m². A method for configuring a slurry for the first-type separator coating layer 1042 may include the following: A raw material of the coating layer is obtained based on a mass proportion, where boehmite occupies 30 portions, deionized water occupies 46 portions, an adhesive occupies 13.5 portions, a water-based wetting agent occupies 1.0 portion, and a water-based dispersant occupies 1.5 portions. Then, the boehmite is added to the deionized water to disperse at a high speed in a high-speed dispersing machine, to obtain slurry dispersing liquid, where a specific rotation speed may be, for example, 15000 r/min, and dispersing duration may be, for example, 2h. Afterwards, the completely dissolved water-based dispersant and water-based wetting agent are added and are fully stirred and ground, where stirring and grinding duration may be, for example, 3h. Finally, vacuumization and defoaming are performed to obtain a uniformly mixed slurry for the first-type separator coating layer 1042.

In still another example, the first-type separator coating layer 1042 may include an adhesive polymer with a mass content of 0.62 g/m². A method for configuring a slurry for the first-type separator coating layer 1042 may include the following: A raw material of the coating layer is obtained based on a mass proportion, where polyvinylidene difluoride-hexafluoropropylene occupies 51.5 portions, deionized water occupies 46 portions, a water-based wetting agent occupies 1.0 portion, and a water-based dispersant occupies 1.5 portions. Then, the polyvinylidene difluoride-hexafluoropropylene is added to the deionized water to disperse at a high speed in a high-speed dispersing machine, to obtain slurry dispersing liquid, where a specific rotation speed may be, for example, 15000 r/min, and dispersing duration may be, for example, 2h. Afterwards, the completely dissolved water-based dispersant and water-based wetting agent are added and are fully stirred and ground, where stirring and grinding duration may be, for example, 3h. Finally, vacuumization and defoaming are performed to obtain a uniformly mixed slurry for the first-type separator coating layer 1042.

If a mass content of an adhesive polymer is 0.6 g/m², a slurry ratio of the first-type separator coating layer 1042 may include, for example, polyvinylidene difluoride-hexafluoropropylene occupies 47.5 portions, deionized water occupies 50 portions, a water-based wetting agent occupies 1.0 portion, and a water-based dispersant occupies 1.5 portions.

In yet another example, the first-type separator coating layer 1042 may include an adhesive polymer with a mass content of 0.45 g/m². A method for configuring a slurry for the first-type separator coating layer 1042 may include the following: A raw material of the coating layer is obtained based on a mass proportion, where a polyhexafluoropropylene copolymer occupies 52.0 portions, deionized water occupies 45.5 portions, a water-based wetting agent occupies 1.0 portion, and a water-based dispersant occupies 1.5 portions. Then, the polyhexafluoropropylene copolymer is added to the deionized water to disperse at a high speed in a high-speed dispersing machine, to obtain slurry dispersing liquid, where a specific rotation speed may be, for example, 15000 r/min, and dispersing duration may be, for example, 2h. Afterwards, the completely dissolved water-based dispersant and water-based wetting agent are added and are fully stirred and ground, where stirring and grinding duration may be, for example, 3h. Finally, vacuumization and defoaming are performed to obtain a uniformly mixed slurry for the first-type separator coating layer 1042.

Optionally, the first-type separator coating layer 1042 includes an adhesive polymer with a mass content of 0.8 g/m² to 2.5 g/m².

Optionally, crystallinity of the first-type separator coating layer 1042 is less than 80%.

Optionally, crystallinity of the first-type separator coating layer 1042 may be 50.0% to 80.0%.

Optionally, a solubility parameter of the first-type separator coating layer 1042 is a first solubility parameter, a solubility parameter of an electrolyte in the battery is a second solubility parameter. The first solubility parameter is less than or equal to the second solubility parameter, and a difference between the second solubility parameter and the first solubility parameter is less than a preset solubility parameter.

In an example, the first solubility parameter is 20 to 26±1 (J/cm³)^{0.5}, and the second solubility parameter is 26±1 (J/cm³)^{0.5}.

In an example, the preset solubility parameter is less than or equal to 5 (J/cm³)^{0.5}.

Because the solubility parameter of the first-type separator coating layer 1042 is less than the solubility parameter of the electrolyte, the first-type separator coating layer 1042 does not completely dissolve in the electrolyte. If the solubility parameter of the first-type separator coating layer 1042 is far greater than the solubility parameter of the electrolyte, the first-type separator coating layer 1042 is excessively fused with the electrolyte, and it is difficult for the first-type separator coating layer 1042 to completely wrap a side edge 10414 of the electrode plate. With reference to FIG. 4 and FIG. 5, in this embodiment of this application, widths of the electrode plate in a transverse direction and a machine direction are large, a thickness direction of the electrode plate is perpendicular to both the transverse direction and the machine direction, and a surface of the electrode plate in the thickness direction may be referred to as the side edge 10414 of the electrode plate. A difference between the solubility parameter of the first-type separator coating layer 1042 and the solubility parameter of the electrolyte is small, so that separator coating layers disposed face to face can be fused to form the first-type separator coating layer 1042, which further helps improve adhesion between electrode plates, thereby helping improve dynamics performance of the battery and reduce polarization between batteries.

The adhesive polymer may include, for example, at least one of the following: polyvinylidene difluoride, polyhexafluoropropylene, a vinylidene fluoride-hexafluoropropylene copolymer, a vinylidene fluoride-trichloroethylene copolymer, a polyethylene-vinyl acetate copolymer, sodium carboxymethyl cellulose, styrene-butadiene rubber, polyacrylic acid, polyacrylic acid salt, polyacrylate, polyacrylonitrile, polyamide, polyimide, polyethylene oxide, cellulose acetate, cellulose acetate butyrate, cellulose acetate propionate, polyvinylpyrrolidone, polyvinyl acetate, polyvinylether, polymethyl methacrylate, and polytetrafluoroethylene.

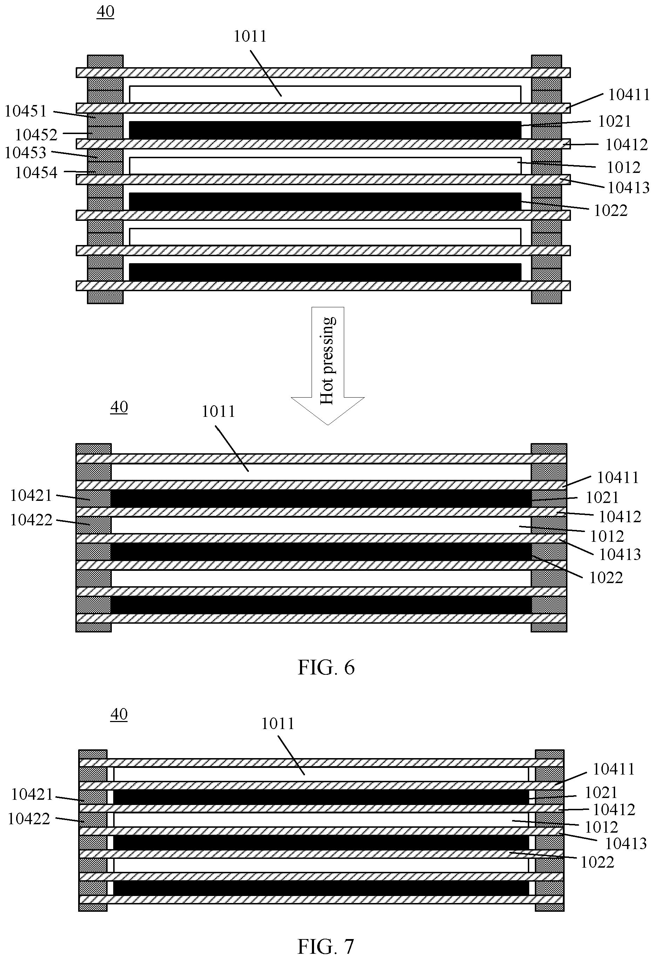

FIG. 6 is a schematic diagram of a structure of processing a battery 40 by using a hot pressing process according to an embodiment of this application. An upper figure in FIG. 6 (that is, a figure located above an arrow in FIG. 6) is a schematic diagram of a structure of a battery 40 before the hot pressing process. A lower figure in FIG. 6 (that is, a figure located below the arrow in FIG. 6) is a schematic diagram of a structure of a battery 40 after the hot pressing process.

The hot pressing process may be, for example, a process of shaping and activating a raw material of the battery 40 through pressurization, heating, and the like. The hot pressing process may be performed, for example, after a process such as stacking or winding. In the example shown in FIG. 6, a parameter in the hot pressing process may include a hot pressing pressure, a hot pressing temperature, and hot pressing time. In an example, the hot pressing pressure may be 0.1 MPa to 2.0 MPa, the hot pressing temperature may be 25°C to 100°C, and the hot pressing time may be 20 min to 300 min. In another example, the hot pressing pressure may be 0.5 MPa to 1.0 MPa, the hot pressing temperature may be 60°C to 90°C, and the hot pressing time may be 60 min to 150 min.

The battery 40 may include a positive electrode plate 1011, a positive electrode plate 1012, a negative electrode plate 1021, and a negative electrode plate 1022 that are sequentially stacked. The positive electrode plate 1011 and the positive electrode plate 1012 may be two adjacent positive electrode plates. The negative electrode plate 1021 and the negative electrode plate 1022 may be two adjacent negative electrode plates. The negative electrode plate 1021 is located between the positive electrode plate 1011 and the positive electrode plate 1012, and the positive electrode plate 1012 is located between the negative electrode plate 1021 and the negative electrode plate 1022.

The battery 40 may further include a base separator 10411, a base separator 10412, and a base separator 10413. The base separator 10412 may be located between the base separator 10411 and the base separator 10413.

The base separator 10411 may be located between the positive electrode plate 1011 and the negative electrode plate 1021, and the base separator 10411 may be adhered to the positive electrode plate 1011. Optionally, there may be a specific gap between the base separator 10411 and the negative electrode plate 1021.

The base separator 10412 may be located between the negative electrode plate 1021 and the positive electrode plate 1012, and the base separator 10412 may be adhered to the negative electrode plate 1021. Optionally, there may be a specific gap between the base separator 10412 and the positive electrode plate 1012.

The base separator 10413 may be located between the positive electrode plate 1012 and the negative electrode plate 1022, and the base separator 10413 may be adhered to the positive electrode plate 1012. Optionally, there may be a specific gap between the base separator 10413 and the negative electrode plate 1022.

As shown in the upper figure in FIG. 6, a separator coating layer 10451 is adhered to an edge region of the base separator 10411, and the separator coating layer 10451 is located on a surface that is of the base separator 10411 and that is close to the base separator 10412. A separator coating layer 10452 is adhered to an edge region of the base separator 10412, and the separator coating layer 10452 is located on a surface that is of the base separator 10412 and that is close to the base separator 10411. Both the separator coating layer 10451 and the separator coating layer 10452 are separator coating layers with adhesion that can melt at a high temperature. The separator coating layer 10451 and the separator coating layer 10452 may be located on a same side of the negative electrode plate 1021.

Optionally, widths of the separator coating layer 10451 and the separator coating layer 10452 may be 0.1% to 45% of a width of the negative electrode plate 1021.

Optionally, widths of the separator coating layer 10451 and the separator coating layer 10452 may be 0.5% to 5.0% of a width of the negative electrode plate 1021.

Similarly, as shown in the upper figure in FIG. 6, a separator coating layer 10453 is adhered to an edge region of the base separator 10412, and the separator coating layer 10453 is located on a surface that is of the base separator 10412 and that is close to the base separator 10413. A separator coating layer 10454 is adhered to an edge region of the base separator 10413, and the separator coating layer 10454 is located on a surface that is of the base separator 10413 and that is close to the base separator 10412. Both the separator coating layer 10453 and the separator coating layer 10454 are separator coating layers with adhesion that can melt at a high temperature. The separator coating layer 10453 and the separator coating layer 10454 may be located on a same side of the positive electrode plate 1012.

Optionally, widths of the separator coating layer 10453 and the separator coating layer 10454 may be 0.1% to 45% of a width of the positive electrode plate 1012.

Optionally, widths of the separator coating layer 10453 and the separator coating layer 10454 may be 0.5% to 5.0% of a width of the positive electrode plate 1012.

The hot pressing process can facilitate tight bonding between the base separator and the electrode plate. As shown in the lower figure in FIG. 6, after the hot pressing process, the base separator 10411 can be adhered to both the positive electrode plate 1011 and the negative electrode plate 1021, the base separator 10412 can be adhered to both the negative electrode plate 1021 and the positive electrode plate 1012, and the base separator 10413 can be adhered to both the positive electrode plate 1012 and the negative electrode plate 1022.

In addition, the hot pressing process can facilitate fusion of two first-type separator coating layers 1042 that are close to each other. As shown in the lower figure in FIG. 6, in the hot pressing process, the separator coating layer 10451 and the separator coating layer 10452 may melt under an effect of a high temperature and pressurization, and flow and spread on the base separator 10411 and the base separator 10412, and then are fused together to form a first-type separator coating layer 10421. Therefore, the first-type separator coating layer 10421 may be connected between the base separator 10411 and the base separator 10412, so that a side that is of the negative electrode plate 1021 and that is close to the separator coating layer 10451 and the separator coating layer 10452 can be surrounded by the base separator 10411, the first-type separator coating layer 10421, and the base separator 10412. In other words, one end of the electrode plate can be closed by a separator. This helps reduce a possibility of a short circuit between the negative electrode plate 1021 and an adjacent positive electrode plate (for example, the positive electrode plate 1011 or the positive electrode plate 1012).

Similarly, in the hot pressing process, the separator coating layer 10453 and the separator coating layer 10454 may be fused together to form a first-type separator coating layer 10422. Therefore, the first-type separator coating layer 10422 may be connected between the base separator 10412 and the base separator 10413, so that a side that is of the positive electrode plate 1012 and that is close to the separator coating layer 10453 and the separator coating layer 10454 can be surrounded by the base separator 10412, the first-type separator coating layer 10422, and the base separator 10413. This helps reduce a possibility of a short circuit between the positive electrode plate 1012 and an adjacent negative electrode plate (for example, the negative electrode plate 1021 or the negative electrode plate 1022).

In addition, the separator coating layer that can melt at a high temperature is disposed in the edge region of the base separator, which helps improve tightness of bonding between the separator and the electrode plate, thereby reducing a risk of lithium ion precipitation. Moreover, the separator coating layer that can melt at a high temperature is disposed in the edge region of the base separator, which not only helps improve overall hot pressing uniformity of an electrode, but also helps improve bonding force between the electrode plate and the separator, thereby helping improve cycle performance of the battery. In addition, in a heat abuse scenario or the like, due to an effect of adhesive force, it is more difficult for the separator to shrink, thereby helping reduce a deformation amount of a cell.

In the example in FIG. 6, the first-type separator coating layer 10421 may alternatively be adhered to a side edge of the negative electrode plate 1021. Similarly, the first-type separator coating layer 10422 may alternatively be adhered to a side edge of the positive electrode plate 1012. In another example, as shown in FIG. 7, there may be a gap between the first-type separator coating layer 10421 and the side edge of the negative electrode plate 1021, that is, the first-type separator coating layer 10421 may not be adhered to the side edge of the negative electrode plate 1021. Similarly, there may be a gap between the first-type separator coating layer 10422 and the side edge of the positive electrode plate 1012, that is, the first-type separator coating layer 10422 may not be adhered to the side edge of the positive electrode plate 1012. This helps provide a margin for shrinkage of the base separator.

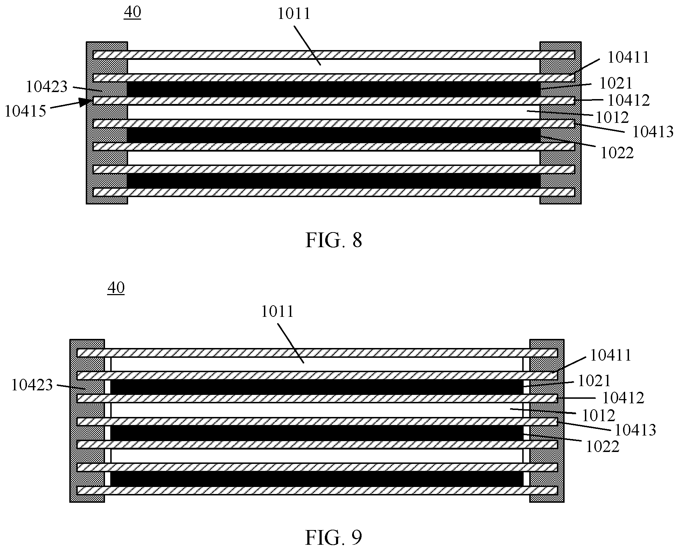

In the example shown in FIG. 6, the first-type separator coating layer 10421 may be located in interval space formed between the base separator 10411 and the base separator 10412. Similarly, the first-type separator coating layer 10422 may be located in interval space formed between the base separator 10412 and the base separator 10413. In another example, as shown in FIG. 8, a plurality of first-type separator coating layers 10423 may span a plurality of base separators (for example, the base separator 10411, the base separator 10412, and the base separator 10413), and are fused together at edges of the plurality of base separators. For example, after hot pressing, the separator coating layer 10451, the separator coating layer 10452, the separator coating layer 10453, and the separator coating layer 10454 (as shown in FIG. 6) located on a same side of the battery 40 may be fused together, to form the first-type separator coating layer 10423 shown in FIG. 8. The first-type separator coating layer 10423 may be connected to all of the base separator 10411, the base separator 10412, and the base separator 10413, and the first-type separator coating layer 10423 may wrap a side edge 10415 of the base separator 10412. As described above, the first-type separator coating layer 10423 may be adhered to the first edge region of the base separator 10411 and the second edge region of the base separator 10412. In addition, the first-type separator coating layer 10423 may further be adhered to a third edge region of the base separator 10412, the side edge 10415 of the base separator 10412, and a fourth edge region of the base separator 10413. The side edge 10415 is connected between the second edge region of the base separator 10412 and the third edge region of the base separator 10412, the third edge region and the fourth edge region are disposed opposite to each other, and the first edge region, the second edge region, the third edge region, the fourth edge region, and the side edge 10415 are all located on a same side of the battery 40.

In the example shown in FIG. 8, the first-type separator coating layer 10423 may be adhered to the side edge of the negative electrode plate 1021 and the side edge of the positive electrode plate 1012. With reference to FIG. 7, it can be learned that the first-type separator coating layer 10423 shown in FIG. 8 may not be adhered to a side edge of the electrode plate. As shown in FIG. 9, the first-type separator coating layer 10423 may be adhered to neither the side edge of the negative electrode plate 1021 nor the side edge of the positive electrode plate 1012. It should be understood that in another possible example, the first-type separator coating layer 10423 may be adhered to a side edge of at least one target electrode plate in the plurality of positive electrode plates 101 and the plurality of negative electrode plates 102 shown in FIG. 4, and is not adhered to a side edge of an electrode plate other than the at least one target electrode plate in the plurality of positive electrode plates 101 and the plurality of negative electrode plates 102. This helps provide a margin for shrinkage of the base separator.

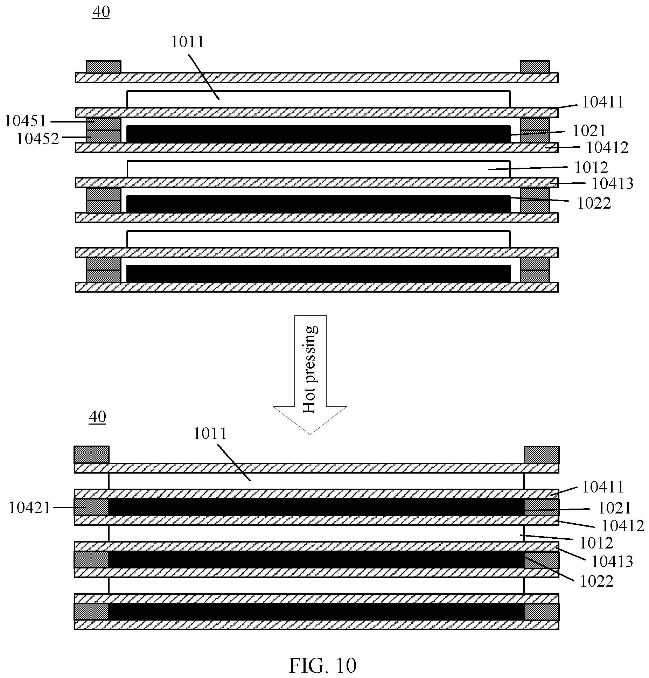

FIG. 10 is a schematic diagram of another structure of processing a battery 40 by using a hot pressing process according to an embodiment of this application. An upper figure in FIG. 10 (that is, a figure located above an arrow in FIG. 10) is a schematic diagram of another structure of a battery 40 before the hot pressing process. A lower figure in FIG. 10 (that is, a figure located below the arrow in FIG. 10) is a schematic diagram of another structure of a battery 40 after the hot pressing process. Similar to the example shown in FIG. 6, the battery 40 shown in FIG. 10 may include a positive electrode plate 1011, a positive electrode plate 1012, a negative electrode plate 1021, a negative electrode plate 1022, a base separator 10411, a base separator 10412, and a base separator 10413.

As shown in the upper figure in FIG. 10, a separator coating layer 10451 is adhered to an edge region of the base separator 10411, and the separator coating layer 10451 is located on a surface that is of the base separator 10411 and that is close to the base separator 10412. A separator coating layer 10452 is adhered to an edge region of the base separator 10412, and the separator coating layer 10452 is located on a surface that is of the base separator 10412 and that is close to the base separator 10411. Both the separator coating layer 10451 and the separator coating layer 10452 are separator coating layers with adhesion that can melt at a high temperature. The separator coating layer 10451 and the separator coating layer 10452 may be located on a same side of the negative electrode plate 1021.

Different from the example shown in FIG. 6, in the example shown in FIG. 10, the separator coating layer 10453 shown in FIG. 6 may not be adhered to a surface of that is of the base separator 10412 and that is close to the base separator 10413, and the separator coating layer 10454 shown in FIG. 6 may not be adhered to a surface that is of the base separator 10413 and that is close to the base separator 10412.

Similar to the example shown in FIG. 6, as shown in the lower figure in FIG. 10, the hot pressing process facilitates tight bonding between the base separator and the electrode plate.

As shown in the lower figure in FIG. 10, the separator coating layer 10451 and the separator coating layer 10452 may be fused together to form a first-type separator coating layer 10421, and both the separator coating layer 10451 and the separator coating layer 10452 are located between the base separator 10411 and the base separator 10412. Therefore, the first-type separator coating layer 10421 may be connected between the base separator 10411 and the base separator 10412, so that a side that is of the negative electrode plate 1021 and that is close to the separator coating layer 10451 and the separator coating layer 10452 can be surrounded by the base separator 10411, the first-type separator coating layer 10421, and the base separator 10412. Because neither the separator coating layer 10453 nor the separator coating layer 10454 shown in FIG. 6 is disposed between the base separator 10412 and the base separator 10413, the example shown in FIG. 10 may not have the first-type separator coating layer 10422 shown in FIG. 6.

In the example shown in FIG. 10, the separator coating layer and the base separator surrounding the negative electrode plate help reduce a possibility of a short circuit between the negative electrode plate and an adjacent positive electrode plate. Compared with the examples shown in FIG. 3 and FIG. 6, in the embodiment shown in FIG. 10, fewer separator coating layer materials are used to prevent a short circuit occurred between the positive electrode plate and the negative electrode plate.

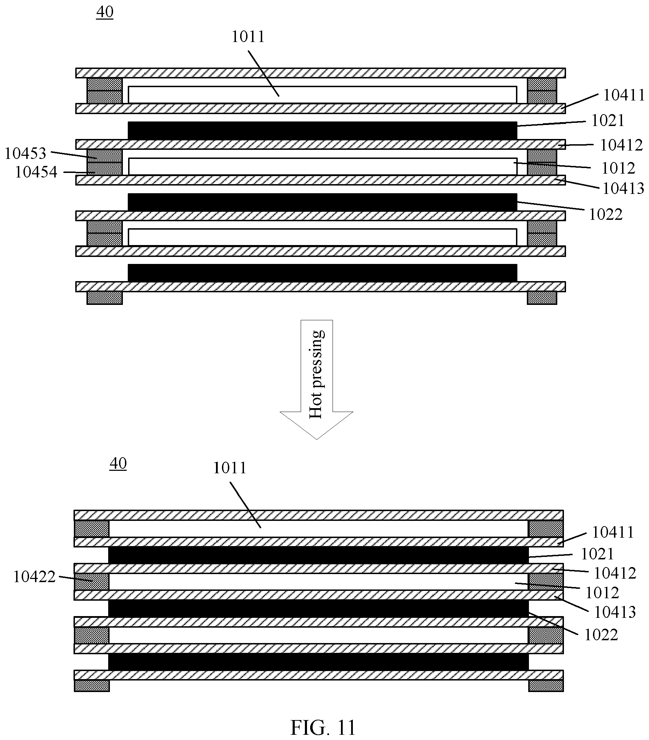

FIG. 10 is a schematic diagram of still another structure of processing a battery 40 by using a hot pressing process according to an embodiment of this application. An upper figure in FIG. 11 (that is, a figure located above an arrow in FIG. 11) is a schematic diagram of a still another structure of a battery 40 before the hot pressing process. A lower figure in FIG. 11 (that is, a figure located below the arrow in FIG. 11) is a schematic diagram of still another structure of a battery 40 after the hot pressing process. Similar to the example shown in FIG. 6, the battery 40 shown in FIG. 11 may include a positive electrode plate 1011, a positive electrode plate 1012, a negative electrode plate 1021, a negative electrode plate 1022, a base separator 10411, a base separator 10412, and a base separator 10413.

Different from the example shown in FIG. 6, as shown in the upper figure in FIG. 11, the separator coating layer 10451 shown in FIG. 6 may not be adhered to a surface that is of the base separator 10411 and that is close to the base separator 10412, and the separator coating layer 10452 shown in FIG. 6 may not be adhered to a surface that is of the base separator 10412 and that is close to the base separator 10411.

As shown in the upper figure in FIG. 11, a separator coating layer 10453 is adhered to an edge region of the base separator 10412, and the separator coating layer 10453 is located on a surface that is of the base separator 10412 and that is close to the base separator 10413. A separator coating layer 10454 is adhered to an edge region of the base separator 10413, and the separator coating layer 10454 is located on a surface that is of the base separator 10413 and that is close to the base separator 10412. Both the separator coating layer 10453 and the separator coating layer 10454 are separator coating layers with adhesion that can melt at a high temperature. The separator coating layer 10453 and the separator coating layer 10454 may be located on a same side of the positive electrode plate 1012.

Similar to the example shown in FIG. 6, as shown in the lower figure in FIG. 11, the hot pressing process facilitates tight bonding between the base separator and the electrode plate.

As shown in the lower figure in FIG. 11, the separator coating layer 10453 and the separator coating layer 10454 may be fused together to form a first-type separator coating layer 10422, and both the separator coating layer 10453 and the separator coating layer 10454 are located between the base separator 10412 and the base separator 10413. Therefore, the first-type separator coating layer 10422 may be connected between the base separator 10412 and the base separator 10413, so that a side that is of the positive electrode plate 1012 and that is close to the separator coating layer 10453 and the separator coating layer 10454 can be surrounded by the base separator 10412, the first-type separator coating layer 10422, and the base separator 10413. Because neither the separator coating layer 10451 nor the separator coating layer 10452 shown in FIG. 6 is disposed between the base separator 10411 and the base separator 10412, the example shown in FIG. 11 may not have the first-type separator coating layer 10421 shown in FIG. 6.

In the example shown in FIG. 11, the separator coating layer and the base separator surrounding the positive electrode plate help reduce a possibility of a short circuit between the positive electrode plate and an adjacent negative electrode plate. Compared with the examples shown in FIG. 3 and FIG. 6, in the embodiment shown in FIG. 11, fewer separator coating layer materials are used to prevent a short circuit occurred between the positive and negative electrodes.

In the example shown in FIG. 10, the first-type separator coating layer 10423 may be located in interval space formed between the base separator 10411 and the base separator 10412. In another example, the first-type separator coating layer 10423 may span a plurality of base separators (for example, the base separator 10411, the base separator 10412, and the base separator 10413), and are fused together at edges of the plurality of base separators.

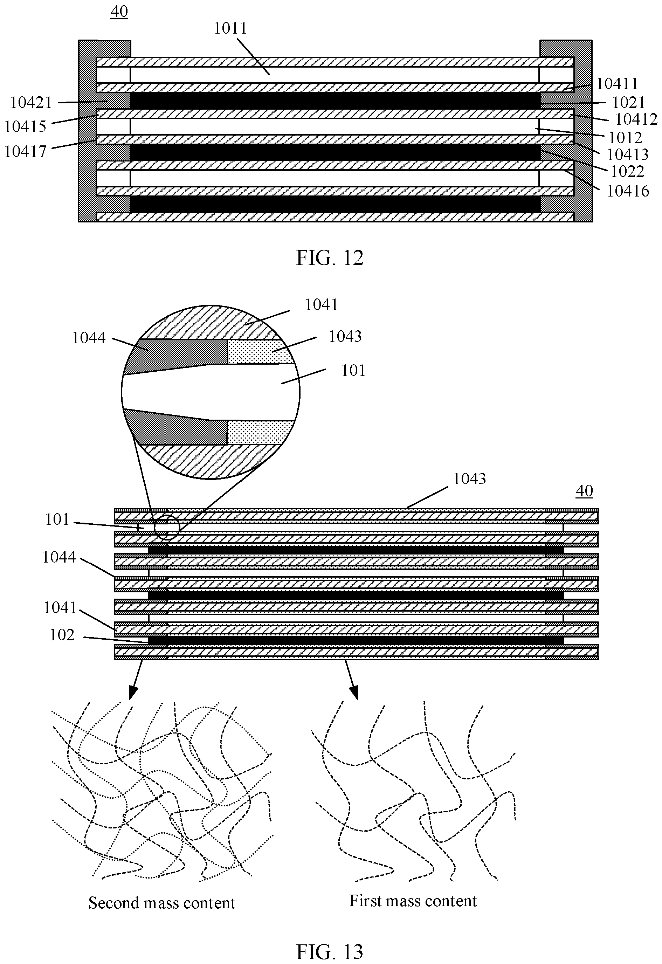

As shown in FIG. 12, the first-type separator coating layer 10423 may be connected to all of the base separator 10411, the base separator 10412, the base separator 10413, and a base separator 10416. The base separator 10413 is located between the base separator 10412 and the base separator 10416. The base separator 10413 and the base separator 10416 may be adjacent to a same electrode plate. The base separator 10411 and the base separator 10412 are adhered to two sides of the negative electrode plate 1021, and the base separator 10413 and the base separator 10416 are adhered to two sides of the negative electrode plate 1022. In addition to being adhered to the first edge region of the base separator 10411 and the second edge region of the base separator 10412, the first-type separator coating layer 10423 may be further adhered to a fifth edge region of the base separator 10413 and a sixth edge region of the base separator 10416. The fifth edge region and the sixth edge region are disposed opposite to each other. In addition, the first-type separator coating layer 10423 may further wrap a side edge 10415 of the base separator 10412 and a side edge 10417 of the base separator 10413. The first edge region, the second edge region, the fifth edge region, the sixth edge region, the side edge 10415, and the side edge 10417 are located on a same side of the battery 40.

With reference to FIG. 9 and FIG. 12, it can be learned that the first-type separator coating layer 10423 may not be adhered to a side edge of the electrode plate. This helps provide a margin for shrinkage of the base separator.

With reference to FIG. 11 and FIG. 12, it can be learned that in another example, the base separator 10411 and the base separator 10412 may be adhered to two sides of a positive electrode plate, and the base separator 10413 and the base separator 10416 may be adhered to two sides of another positive electrode plate. Under an effect of surface tension or polarity, an edge region of the electrode plate tends to shrink towards a middle region of the electrode plate, so that a thickness of the electrode plate in the edge region is slightly less than a thickness of the electrode plate in the middle region. In other words, it is easier to adhere the separator to the middle region of the electrode plate, and it is more difficult to adhere the separator to the edge region of the electrode plate. As a result, an edge of the electrode plate may be unable to be tightly adhered to the separator, that is, there may be a gap between the electrode plate and the separator. After the battery 40 is charged and discharges electricity a plurality of times, lithium ions may be aggregated and deposited in the gap between the electrode plate and the separator to form solid-state lithium. Because a thickness of the separator is small, and it is easier for the solid-state lithium to penetrate the separator, which increases a possibility of a short circuit between the positive electrode plate 101 and the negative electrode plate 102.

FIG. 13 is a schematic diagram of a structure of a battery 40 according to an embodiment of this application.

The battery 40 may include a plurality of positive electrode plates 101, a plurality of negative electrode plates 102, and a plurality of base separators 1041 that are stacked and disposed at intervals. A white rectangle in FIG. 4 may be used to represent the positive electrode plate 101, a black rectangle in FIG. 4 may be used to represent the negative electrode plate 102, and a rectangle filled with slashes in FIG. 4 may be used to represent the base separator 1041. One negative electrode plate 102 is disposed between any two adjacent positive electrode plates 101, one positive electrode plate 101 is disposed between any two adjacent negative electrode plates 102, and one base separator 1041 is disposed between any adjacent positive electrode plate 101 and negative electrode plate 102. The base separator 1041 may be adhered between the positive electrode plate 101 and the negative electrode plate 102.

The battery 40 may further include a second-type separator coating layer 1043 and a third-type separator coating layer 1044. A white pattern filled with black lattices in FIG. 13 is used to represent the second-type separator coating layer 1043. A black pattern filled with white lattices in FIG. 13 is used to represent the third-type separator coating layer 1044. The second-type separator coating layer 1043 and the third-type separator coating layer 1044 may be adhered to at least one surface of the base separator 1041.

The second-type separator coating layer 1043 may be adhered to a middle region of the base separator 1041, and the third-type separator coating layer 1044 may be adhered to an edge region of the base separator 1041 (for definitions of the middle region and the edge region, refer to the foregoing description and the example shown in FIG. 5, and details are not described herein again). The second-type separator coating layer 1043 may be connected to the third-type separator coating layer 1044. A boundary between the second-type separator coating layer 1043 and the third-type separator coating layer 1044 may correspond to a boundary between the middle region and the edge region of the base separator 1041. There may be no gap between the second-type separator coating layer 1043 and the third-type separator coating layer 1044 to minimize a possibility of existence of a gap between the electrode plate and a separator.

In an example, the second-type separator coating layer 1043 is adhered to the base separator 1041 and completely covers a periphery of the electrode plate; and the third-type separator coating layer 1044 is adhered to the base separator 1041 and is located outside the periphery of the electrode plate.

In another example, the second-type separator coating layer 1043 is adhered to the base separator 1041 and covers a part of the electrode plate; and the third-type separator coating layer 1044 is adhered to the base separator 1041 and includes a first part covering the remaining part of the electrode plate and a second part located outside the periphery of the electrode plate.

Optionally, a width of the third-type separator coating layer 1044 may be 0.1% to 45% of a width of the electrode plate.

Optionally, a width of the third-type separator coating layer 1044 may be 0.5% to 5.0% of a width of the electrode plate.

Optionally, crystallinity of the second-type separator coating layer 1043 is less than 80%.

Optionally, crystallinity of the second-type separator coating layer 1043 may be 50.0% to 80.0%.

Optionally, crystallinity of the third-type separator coating layer 1044 is less than 80%.

Optionally, crystallinity of the second-type separator coating layer 1043 may be 50.0% to 80.0%.

Optionally, a solubility parameter of the third-type separator coating layer 1043 is a first solubility parameter, a solubility parameter of an electrolyte in the battery is a second solubility parameter. The first solubility parameter is less than or equal to the second solubility parameter, and a difference between the second solubility parameter and the first solubility parameter is less than a preset solubility parameter.

In an example, the first solubility parameter is 20 to 26±1 (J/cm³)^{0.5}, and the second solubility parameter is 26±1 (J/cm³)^{0.5}.

In an example, the preset solubility parameter is less than or equal to 5 (J/cm³)^{0.5}.

Because the solubility parameter of the third-type separator coating layer 1043 is less than the solubility parameter of the electrolyte, the third-type separator coating layer 1043 may be compatible with the electrolyte. The solubility parameter of the third-type separator coating layer 1043 differs slightly from the solubility parameter of the electrolyte, and therefore the third-type separator coating layer 1043 is not completely dissolved in the electrolyte, which helps the third-type separator coating layer 1043 spread on the base separator.

Both the second-type separator coating layer 1043 and the third-type separator coating layer 1044 may be sticky, and may be melted at a high temperature (in the battery field, a temperature greater than 40°C to 60°C may be understood as a high temperature). In other words, both the second-type separator coating layer 1043 and the third-type separator coating layer 1044 may include an adhesive polymer. The second-type separator coating layer 1043 includes an adhesive polymer with a first mass content, and the third-type separator coating layer 1044 includes an adhesive polymer with a second mass content, where the first mass content is less than the second mass content. FIG. 13 separately shows schematic diagrams of structures of the first mass content and the second mass content. To be specific, a separator coating layer covering the middle region of the base separator 1041 includes an adhesive polymer with a lower content, and a separator coating layer covering the edge region of the base separator 1041 includes an adhesive polymer with a higher content.

Optionally, the second mass content may be, for example, 0.4 g/m² to 5 g/m².

In an example, the third-type separator coating layer 1044 may include an adhesive polymer with a mass content of 0.5 g/m². A method for configuring a slurry for the third-type separator coating layer 1044 may include the following: A raw material of the coating layer is obtained based on a mass proportion, where a polytetrafluoroethylene copolymer occupies 47.5 portions, deionized water occupies 50 portions, a water-based wetting agent occupies 1.0 portion, and a water-based dispersant occupies 1.5 portions. Then, the polytetrafluoroethylene copolymer is added to the deionized water to disperse at a high speed in a high-speed dispersing machine, to obtain slurry dispersing liquid, where a specific rotation speed may be, for example, 15000 r/min, and dispersing duration may be, for example, 2h. Afterwards, the completely dissolved water-based dispersant and water-based wetting agent are added and are fully stirred and ground, where stirring and grinding duration may be, for example, 3h. Finally, vacuumization and defoaming are performed to obtain a uniformly mixed slurry for the third-type separator coating layer 1044.

In another example, the third-type separator coating layer 1044 may include an adhesive polymer with a mass content of 0.62 g/m². A method for configuring a slurry for the third-type separator coating layer 1044 may include the following: A raw material of the coating layer is obtained based on a mass proportion, where boehmite occupies 30 portions, deionized water occupies 46 portions, an adhesive occupies 13.5 portions, a water-based wetting agent occupies 1.0 portion, and a water-based dispersant occupies 1.5 portions. Then, the boehmite is added to the deionized water to disperse at a high speed in a high-speed dispersing machine, to obtain slurry dispersing liquid, where a specific rotation speed may be, for example, 15000 r/min, and dispersing duration may be, for example, 2h. Afterwards, the completely dissolved water-based dispersant and water-based wetting agent are added and are fully stirred and ground, where stirring and grinding duration may be, for example, 3h. Finally, vacuumization and defoaming are performed to obtain a uniformly mixed slurry for the third-type separator coating layer 1044.

In still another example, the third-type separator coating layer 1044 may include an adhesive polymer with a mass content of 0.62 g/m². A method for configuring a slurry for the third-type separator coating layer 1044 may include the following: A raw material of the coating layer is obtained based on a mass proportion, where polyvinylidene difluoride-hexafluoropropylene occupies 51.5 portions, deionized water occupies 46 portions, a water-based wetting agent occupies 1.0 portion, and a water-based dispersant occupies 1.5 portions. Then, the polyvinylidene difluoride-hexafluoropropylene is added to the deionized water to disperse at a high speed in a high-speed dispersing machine, to obtain slurry dispersing liquid, where a specific rotation speed may be, for example, 15000 r/min, and dispersing duration may be, for example, 2h. Afterwards, the completely dissolved water-based dispersant and water-based wetting agent are added and are fully stirred and ground, where stirring and grinding duration may be, for example, 3h. Finally, vacuumization and defoaming are performed to obtain a uniformly mixed slurry for the third-type separator coating layer 1044.

In yet another example, the third-type separator coating layer 1044 may include an adhesive polymer with a mass content of 0.45 g/m². A method for configuring a slurry for the third-type separator coating layer 1044 may include the following: A raw material of the coating layer is obtained based on a mass proportion, where a polyhexafluoropropylene copolymer occupies 52.0 portions, deionized water occupies 45.5 portions, a water-based wetting agent occupies 1.0 portion, and a water-based dispersant occupies 1.5 portions. Then, the polyhexafluoropropylene copolymer is added to the deionized water to disperse at a high speed in a high-speed dispersing machine, to obtain slurry dispersing liquid, where a specific rotation speed may be, for example, 15000 r/min, and dispersing duration may be, for example, 2h. Afterwards, the completely dissolved water-based dispersant and water-based wetting agent are added and are fully stirred and ground, where stirring and grinding duration may be, for example, 3h. Finally, vacuumization and defoaming are performed to obtain a uniformly mixed slurry for the third-type separator coating layer 1044.

Optionally, the second mass content may be, for example, 0.8 g/m² to 2.5 g/m².

Optionally, a difference between the second mass content and the first mass content may be, for example, 0.05 g/m² to 4.5 g/m².

Optionally, a difference between the second mass content and the first mass content may be, for example, 0.1 g/m² to 2.0 g/m².

The adhesive polymer may include, for example, at least one of the following: polyvinylidene difluoride, polyhexafluoropropylene, a vinylidene fluoride-hexafluoropropylene copolymer, a vinylidene fluoride-trichloroethylene copolymer, a polyethylene-vinyl acetate copolymer, sodium carboxymethyl cellulose, styrene-butadiene rubber, polyacrylic acid, polyacrylic acid salt, polyacrylate, polyacrylonitrile, polyamide, polyimide, polyethylene oxide, cellulose acetate, cellulose acetate butyrate, cellulose acetate propionate, polyvinylpyrrolidone, polyvinyl acetate, polyvinylether, polymethyl methacrylate, and polytetrafluoroethylene.

As shown in a partial enlarged figure in FIG. 13, because the second-type separator coating layer 1043 and the third-type separator coating layer 1044 include adhesive polymers with different mass contents, a thickness of the third-type separator coating layer 1044 may be slightly higher than a thickness of the second-type separator coating layer 1043. To be specific, the third-type separator coating layer 1044 may have a first thickness at a location of a boundary between the third-type separator coating layer 1044 and the second-type separator coating layer 1043, where the first thickness may be the same as the thickness of the second-type separator coating layer 1043; and may have a second thickness at another location of the third-type separator coating layer 1044, where the second thickness is greater than the first thickness. This helps improve tightness of bonding between the separator and the electrode plate.

In some special scenarios, a part of an edge of the electrode plate may be unable to be tightly adhered to the second-type separator coating layer 1043. Because the third-type separator coating layer 1044 has more adhesive polymers, the third-type separator coating layer 1044 may be filled between the second-type separator coating layer 1043 and the electrode plate to further improve tightness of bonding between the separator and the electrode plate.

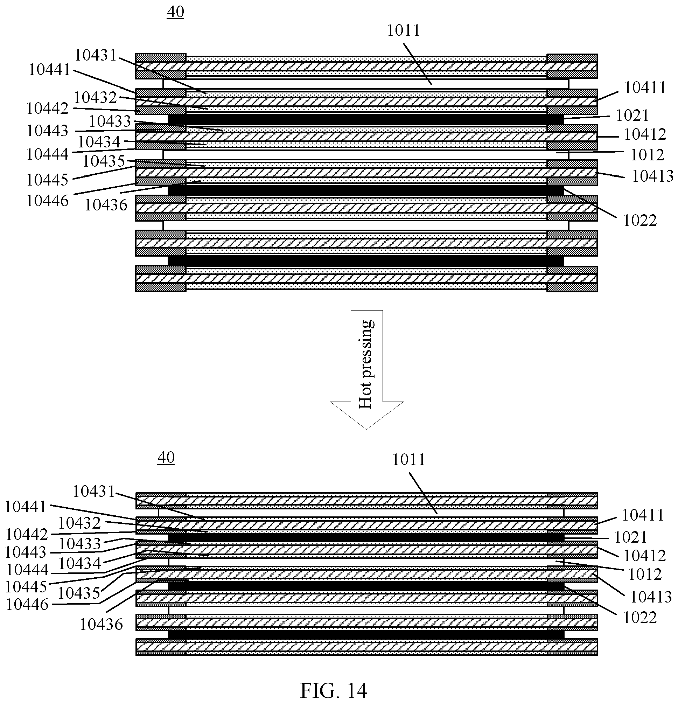

FIG. 14 is a schematic diagram of a structure of processing a battery 40 by using a hot pressing process according to an embodiment of this application. An upper figure in FIG. 14 (that is, a figure located above an arrow in FIG. 14) is a schematic diagram of a structure of a battery 40 before the hot pressing process. A lower figure in FIG. 14 (that is, a figure located below the arrow in FIG. 14) is a schematic diagram of a structure of a battery 40 after the hot pressing process.

The battery 40 may include a positive electrode plate 1011, a positive electrode plate 1012, a negative electrode plate 1021, and a negative electrode plate 1022 that are sequentially stacked. The positive electrode plate 1011 and the positive electrode plate 1012 may be two adjacent positive electrode plates. The negative electrode plate 1021 and the negative electrode plate 1022 may be two adjacent negative electrode plates. The negative electrode plate 1021 is located between the positive electrode plate 1011 and the positive electrode plate 1012, and the positive electrode plate 1012 is located between the negative electrode plate 1021 and the negative electrode plate 1022.

The battery 40 may further include a base separator 10411, a base separator 10412, and a base separator 10413. The base separator 10411 may be located between the positive electrode plate 1011 and the negative electrode plate 1021. The base separator 10412 may be located between the negative electrode plate 1021 and the positive electrode plate 1012. The base separator 10413 may be located between the positive electrode plate 1012 and the negative electrode plate 1022. In other words, the base separator 10412 may be located between the base separator 10411 and the base separator 10413.

The battery 40 may further include a second-type separator coating layer 10431, a second-type separator coating layer 10432, a third-type separator coating layer 10441, and a third-type separator coating layer 10442.

The second-type separator coating layer 10431 is adhered to a side that is of the base separator 10411 and that is away from the base separator 10412, and is adhered to a middle region of the base separator 10411. The third-type separator coating layer 10441 is adhered to the side that is of the base separator 10411 and that is away from the base separator 10412, and is adhered to an edge region of the base separator 10411. The second-type separator coating layer 10432 is adhered to a side that is of the base separator 10411 and that is close to the base separator 10412, and is adhered to a middle region of the base separator 10411. The third-type separator coating layer 10442 is adhered to the side that is of the base separator 10411 and that is close to the base separator 10412, and is adhered to an edge region of the base separator 10411. The third-type separator coating layer 10441 and the third-type separator coating layer 10442 may be located on a same side of the base separator 10411.

As shown in the upper figure in FIG. 14, before the hot pressing process, the third-type separator coating layer 10441 may be adhered to the positive electrode plate 1011, and there may be a specific gap between the second-type separator coating layer 10431 and the positive electrode plate 1011. In the hot pressing process, the third-type separator coating layer 10441 may melt under an effect of a high temperature and pressurization, and flow and spread on the base separator 1041. After the hot pressing process, both the third-type separator coating layer 10441 and the second-type separator coating layer 10431 may be adhered to the positive electrode plate 1011.

As shown in the upper figure in FIG. 14, before the hot pressing process, the third-type separator coating layer 10442 may be adhered to the negative electrode plate 1021, and there may be a specific gap between the second-type separator coating layer 10432 and the negative electrode plate 1021. In the hot pressing process, the third-type separator coating layer 10442 may melt under an effect of a high temperature and pressurization, and flow and spread on the base separator 1041. After the hot pressing process, both the third-type separator coating layer 10442 and the second-type separator coating layer 10432 may be adhered to the negative electrode plate 1021.

The battery 40 may further include a second-type separator coating layer 10433, a second-type separator coating layer 10434, a third-type separator coating layer 10443, and a third-type separator coating layer 10444. The second-type separator coating layer 10433 is adhered to a side that is of the base separator 10412 and that is close to the base separator 10411, and is adhered to a middle region of the base separator 10412. The third-type separator coating layer 10443 is adhered to the side that is of the base separator 10412 and that is close to the base separator 10411, and is adhered to an edge region of the base separator 10412. The second-type separator coating layer 10434 is adhered to a side that is of the base separator 10412 and that is close to the base separator 10413, and is adhered to a middle region of the base separator 10412. The third-type separator coating layer 10444 is adhered to the side that is of the base separator 10412 and that is close to the base separator 10413, and is adhered to an edge region of the base separator 10412. The third-type separator coating layer 10443 and the third-type separator coating layer 10444 may be located on a same side of the base separator 10412.

As shown in the upper figure in FIG. 14, before the hot pressing process, the third-type separator coating layer 10443 may be adhered to the negative electrode plate 1021, and there may be a specific gap between the second-type separator coating layer 10433 and the negative electrode plate 1021. In the hot pressing process, the third-type separator coating layer 10443 may melt under an effect of a high temperature and pressurization, and flow and spread on the base separator 1041. After the hot pressing process, both the third-type separator coating layer 10443 and the second-type separator coating layer 10433 may be adhered to the negative electrode plate 1021.

As shown in the upper figure in FIG. 14, before the hot pressing process, the third-type separator coating layer 10444 may be adhered to the positive electrode plate 1012, and there may be a specific gap between the second-type separator coating layer 10434 and the positive electrode plate 1012. In the hot pressing process, the third-type separator coating layer 10444 may melt under an effect of a high temperature and pressurization, and flow and spread on the base separator 1041. After the hot pressing process, both the third-type separator coating layer 10444 and the second-type separator coating layer 10434 may be adhered to the positive electrode plate 1012.

The battery 40 may further include a second-type separator coating layer 10435, a second-type separator coating layer 10436, a third-type separator coating layer 10445, and a third-type separator coating layer 10446. The second-type separator coating layer 10435 is adhered to a side that is of the base separator 10413 and that is close to the base separator 10412, and is adhered to a middle region of the base separator 10413. The third-type separator coating layer 10445 is adhered to the side that is of the base separator 10413 and that is close to the base separator 10412, and is adhered to an edge region of the base separator 10413. The second-type separator coating layer 10436 is adhered to a side that is of the base separator 10413 and that is away from the base separator 10412, and is adhered to a middle region of the base separator 10413. The third-type separator coating layer 10446 is adhered to the side that is of the base separator 10413 and that is away from the base separator 10412, and is adhered to an edge region of the base separator 10413. The third-type separator coating layer 10445 and the third-type separator coating layer 10446 may be located on a same side of the base separator 10412.

As shown in the upper figure in FIG. 14, before the hot pressing process, the third-type separator coating layer 10445 may be adhered to the positive electrode plate 1012, and there may be a specific gap between the second-type separator coating layer 10435 and the positive electrode plate 1012. In the hot pressing process, the third-type separator coating layer 10445 may melt under an effect of a high temperature and pressurization, and flow and spread on the base separator 1041. After the hot pressing process, both the third-type separator coating layer 10445 and the second-type separator coating layer 10435 may be adhered to the positive electrode plate 1012.

As shown in the upper figure in FIG. 14, before the hot pressing process, the third-type separator coating layer 10446 may be adhered to the negative electrode plate 1022, and there may be a specific gap between the second-type separator coating layer 10436 and the negative electrode plate 1022. In the hot pressing process, the third-type separator coating layer 10446 may melt under an effect of a high temperature and pressurization, and flow and spread on the base separator 1041. After the hot pressing process, both the third-type separator coating layer 10446 and the second-type separator coating layer 10436 may be adhered to the negative electrode plate 1022.

Optionally, widths of the third-type separator coating layer 10441, the third-type separator coating layer 10442, the third-type separator coating layer 10443, the third-type separator coating layer 10444, the third-type separator coating layer 10445, and the third-type separator coating layer 10445 may be 0.1% to 45% of a width of the electrode plate.

Optionally, widths of the third-type separator coating layer 10441, the third-type separator coating layer 10442, the third-type separator coating layer 10443, the third-type separator coating layer 10444, the third-type separator coating layer 10445, and the third-type separator coating layer 10445 may be 0.5% to 5.0% of a width of the electrode plate.

In conclusion, before the hot pressing process, a separator corresponding to a middle region of the electrode plate may include a base separator and a second-type separator coating layer, and a separator corresponding to an edge region of the electrode plate may include a base separator and a third-type separator coating layer. Because a thickness of the second-type separator coating layer may be less than a (minimum) thickness of the third-type separator coating layer, a thickness of the separator corresponding to the middle region of the electrode plate may be less than a thickness of the separator corresponding to the edge region of the electrode plate. After the hot pressing process, an adhesive polymer may undergo physical changes such as hot melting and cross-linking, and the adhesive polymer may be fully filled between the base separator and the electrode plate, thereby reducing a risk of lithium ion precipitation.

In addition, an adhesive polymer with a higher mass content is disposed in the edge region of the base separator, which helps improve a bonding capability of the base separator in the edge region, and helps improve bonding force between the electrode plate and the separator, thereby helping improve cycle performance of the battery and improve cell deformation. Moreover, due to different contents, the adhesive polymer in the edge region may have a higher thickness, which helps improve overall hot pressing uniformity of an electrode.

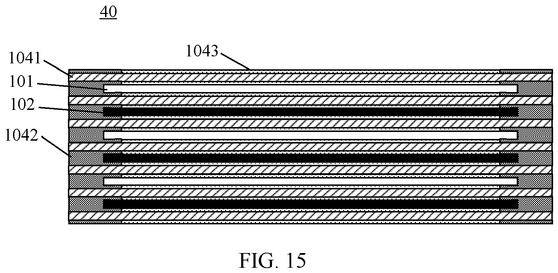

FIG. 15 is a schematic diagram of another structure of a battery 40 according to an embodiment of this application. With reference to examples shown in FIG. 6, FIG. 13, and FIG. 15, it can be learned that after a hot pressing process, adjacent third-type separator coating layers 1044 that are disposed face to face may be fused together to form a first-type separator coating layer 1042 shown in FIG. 15. With reference to examples shown in FIG. 13 and FIG. 15, a mass content of an adhesive polymer included in the first-type separator coating layer 1042 may be greater than a mass content of an adhesive polymer included in a second-type separator coating layer 1043, and the first-type separator coating layer 1042 may be connected between two adjacent base separators 1041 to surround an electrode plate located between the two adjacent substrates. This helps reduce a possibility of a short circuit occurred between adjacent positive electrode plate 101 and negative electrode plate 102.

The following plurality of embodiments are compared below to describe technical effects of the solutions provided in this application.

### Embodiment 1

Embodiment 1 may be applied to a laminated pouch cell 50110227 (where a height is 50 mm, a width is 110 mm, and a length is 227 mm) with a capacity of 10.8 Ah and a working voltage range of 2.75 V to 4.30 V

The battery includes a conventional base separator, and a separator coating layer is uniformly coated on two planes of the base separator, where the separator coating layer has adhesion. In other words, a content of an adhesive polymer in a middle region of the separator coating layer is approximately equal to a content of an adhesive polymer in an edge region of the separator coating layer. A mass content of the adhesive polymer is 0.1 g/m².

### Embodiment 2

Embodiment 2 may be applied to a winding pouch cell 506390 (where a height is 50 mm, a width is 63 mm, and a length is 90 mm) with a capacity of 5 Ah (only an edge is coated) and a working voltage range of 3.0 V to 4.48 V

The battery includes a base separator with a thickness of 5.5 µm and a material of polyethylene, and a porosity of the base separator is 39.0%. The battery further includes a separator coating layer adhered to an edge region of the base separator (the separator coating layer with adhesion is not adhered to a middle region of the base separator). The separator coating layer includes an adhesive polymer with a mass content of 0.5 g/m². The separator coating layer may be coated on two surfaces of the base separator in a machine direction TD. A width of the separator coating layer may be 3 mm. The separator coating layer may correspond to the first-type separator coating layer described in FIG. 4 to FIG. 12.

### Embodiment 3

Embodiment 3 may be applied to a laminated pouch cell 50110227 (where a height is 50 mm, a width is 110 mm, and a length is 227 mm) with a capacity of 10.8 Ah and a working voltage range of 2.75 V to 4.30 V

The battery includes a base separator with a thickness of 7.0 µm and a material of polyethylene, and a porosity of the base separator is 38.6%. The battery further includes a separator coating layer adhered to an edge region of the base separator (the separator coating layer with adhesion is not adhered to a middle region of the base separator). The separator coating layer may be coated on two surfaces of the base separator in a machine direction TD and a transverse direction MD. A width of the separator coating layer may be 2 mm. The separator coating layer includes an adhesive polymer and a ceramic coating layer, and a ratio of the adhesive polymer to the ceramic coating layer is 5:5. The separator coating layer includes an adhesive polymer with a mass content of 0.62 g/m². The separator coating layer includes a ceramic coating layer with a mass content of 0.62 g/m². The separator coating layer may correspond to the first-type separator coating layer described in FIG. 4 to FIG. 12.

### Embodiment 4

Embodiment 4 may be applied to a winding pouch cell 506390 (where a height is 50 mm, a width is 63 mm, and a length is 90 mm) with a capacity of 5 Ah and a working voltage range of 3.0 V to 4.48 V

The battery includes a base separator with a thickness of 5.5 µm and a material of polyethylene, and a porosity of the base separator is 39.0%. The battery further includes a separator coating layer 1 adhered to an edge region of the base separator, and a separator coating layer 2 adhered to a middle region of the base separator. Both the separator coating layer 1 and the separator coating layer 2 may be coated on two surfaces of the base separator in a machine direction TD. A width of the separator coating layer 1 may be 3 mm. Both the separator coating layer 1 and the separator coating layer 2 include an adhesive polymer. In the separator coating layer 1, a mass content of the adhesive polymer is 0.6 g/m². In the separator coating layer 2, a mass content of the adhesive polymer is 0.1 g/m². The separator coating layer 1 may correspond to the third-type separator coating layer described in FIG. 13 and FIG. 14 and the first-type separator coating layer described in FIG. 15. The separator coating layer 2 may correspond to the second-type separator coating layer described in FIG. 13 to FIG. 15.

### Embodiment 5

Embodiment 5 may be applied to a winding pouch cell 50110227 (where a height is 50 mm, a width is 110 mm, and a length is 227 mm) with a capacity of 10.8 Ah and a working voltage range of 2.75 V to 4.30 V

The battery includes a base separator with a thickness of 7.0 µm and a material of polyethylene, and a porosity of the base separator is 38.6%. The battery further includes a separator coating layer 1 adhered to an edge region of the base separator, and a separator coating layer 2 adhered to a middle region of the base separator. Both the separator coating layer 1 and the separator coating layer 2 may be coated on two surfaces of the base separator in a machine direction TD. A width of the separator coating layer 1 may be 2 mm. Both the separator coating layer 1 and the separator coating layer 2 include an adhesive polymer. In the separator coating layer 1, a mass content of the adhesive polymer is 0.62 g/m². The separator coating layer 2 further includes a ceramic coating layer, and a ratio of the ceramic coating layer to the adhesive polymer is 5:5. In the separator coating layer 2, a total mass content of the ceramic coating layer and the adhesive polymer is 0.62 g/m². The separator coating layer 1 may correspond to the third-type separator coating layer described in FIG. 13 and FIG. 14 and the first-type separator coating layer described in FIG. 15. The separator coating layer 2 may correspond to the second-type separator coating layer described in FIG. 13 to FIG. 15.

A raw material of the separator coating layer 2 may include, for example, 25 portions of boehmite, 25 portions of polyvinylidene difluoride-hexafluoropropylene powder, 46 portions of deionized water, 3.5 portions of adhesives, 1.0 portion of water-based wetting agent, and 1.5 portions of water-based dispersant. Then, the boehmite is added to the deionized water to disperse at a high speed in a high-speed dispersing machine, to obtain slurry dispersing liquid, where a specific rotation speed may be, for example, 15000 r/min, and dispersing duration may be, for example, 2h. Afterwards, the completely dissolved polyvinylidene difluoride-hexafluoropropylene, deionized water, adhesive, water-based wetting agent, and water-based dispersant are added and are fully stirred and ground, where stirring and grinding duration may be, for example, 3h. Finally, vacuumization and defoaming are performed to obtain a uniformly mixed slurry for the third-type separator coating layer.

### Embodiment 6

Embodiment 6 may be applied to a winding pouch cell 454378 (where a height is 45 mm, a width is 43 mm, and a length is 78 mm) with a capacity of 2.8 Ah and a working voltage range of 3.0 V to 4.48 V

The battery includes a base separator with a thickness of 7.0 µm and a material of polypropylene, and a porosity of the base separator is 37.7%.

The battery further includes a ceramic coating layer adhered to a single surface, a separator coating layer 1 adhered to an edge region of the base separator, and a separator coating layer 2 adhered to a middle region of the base separator. Both the separator coating layer 1 and the separator coating layer 2 may be coated on two surfaces of the base separator in a machine direction TD. A width of the separator coating layer 1 may be 2 mm. Both the separator coating layer 1 and the separator coating layer 2 include an adhesive polymer. In the separator coating layer 1, a mass content of the adhesive polymer is 0.95 g/m². In the separator coating layer 2, a mass content of the adhesive polymer is 0.5 g/m². The separator coating layer 1 may correspond to the third-type separator coating layer described in FIG. 13 and FIG. 14 and the first-type separator coating layer described in FIG. 15. The separator coating layer 2 may correspond to the second-type separator coating layer described in FIG. 13 to FIG. 15.

A raw material of the ceramic coating layer may include, for example, 50 portions of boehmite, 45.5 portions of deionized water, 1.0 portion of carboxymethyl cellulose, and 3.5 portions of styrene-butadiene rubber. Then, the boehmite is added to the deionized water to disperse at a high speed in a high-speed dispersing machine, to obtain slurry dispersing liquid, where a specific rotation speed may be, for example, 15000 r/min, and dispersing duration may be, for example, 2h. Afterwards, the completely dissolved carboxymethyl cellulose and styrene-butadiene rubber are added and are fully stirred and ground, where stirring and grinding duration may be, for example, 3h. Finally, vacuumization and defoaming are performed to obtain a uniformly mixed slurry for the third-type separator coating layer.

### Embodiment 7

Embodiment 7 may be applied to a winding pouch cell 455382 (where a height is 45 mm, a width is 53 mm, and a length is 82 mm) with a capacity of 3.6 Ah and a working voltage range of 3.0 V to 4.48 V

The battery includes a base separator with a thickness of 4.5 µm and a material of polyethylene, and a porosity of the base separator is 38.5%. The battery further includes a separator coating layer 1 adhered to an edge region of the base separator, and a separator coating layer 2 adhered to a middle region of the base separator. Both the separator coating layer 1 and the separator coating layer 2 may be coated on two surfaces of the base separator in a machine direction TD. A width of the separator coating layer 1 may be 1.5 mm. Both the separator coating layer 1 and the separator coating layer 2 include an adhesive polymer and a ceramic coating layer. In the separator coating layer 1, a ratio of the adhesive polymer to the ceramic coating layer is 7:3. In the separator coating layer 2, a ratio of the adhesive polymer to the ceramic coating layer is 5:5. A mass content of the separator coating layer on a single side is 0.43 g/m². The separator coating layer 1 may correspond to the third-type separator coating layer described in FIG. 13 and FIG. 14 and the first-type separator coating layer described in FIG. 15. The separator coating layer 2 may correspond to the second-type separator coating layer described in FIG. 13 to FIG. 15.

For example, a method for configuring a slurry for the separator coating layer 1 may include the following: A raw material of the coating layer is obtained based on a mass proportion, where boehmite occupies 13.5 portions, deionized water occupies 46 portions, an adhesive occupies 32.5 portions, an adhesive occupies 5 portions, a water-based wetting agent occupies 1.0 portion, and a water-based dispersant occupies 1.5 portions. Then, the boehmite is added to the deionized water to disperse at a high speed in a high-speed dispersing machine, to obtain slurry dispersing liquid, where a specific rotation speed may be, for example, 15000 r/min, and dispersing duration may be, for example, 2h. Afterwards, the completely dissolved water-based dispersant, water-based wetting agent, and PVDF powder are added and are fully stirred and ground, where stirring and grinding duration may be, for example, 3h. Finally, vacuumization and defoaming are performed to obtain a uniformly mixed slurry for the third-type separator coating layer.

A method for configuring a slurry for the separator coating layer 2 may include the following: A raw material of the coating layer is obtained based on a mass proportion, where boehmite occupies 23.5 portions, an adhesive occupies 23.5 portions, deionized water occupies 46 portions, a water-based wetting agent occupies 1.0 portion, and a water-based dispersant occupies 1.5 portions. Then, the boehmite is added to the deionized water to disperse at a high speed in a high-speed dispersing machine, to obtain slurry dispersing liquid, where a specific rotation speed may be, for example, 15000 r/min, and dispersing duration may be, for example, 2h. Afterwards, the completely dissolved water-based dispersant, water-based wetting agent, and PVDF powder are added and are fully stirred and ground, where stirring and grinding duration may be, for example, 3h. Finally, vacuumization and defoaming are performed to obtain a uniformly mixed slurry for the third-type separator coating layer. The separator coating layer 1 may correspond to the third-type separator coating layer described in FIG. 13 and FIG. 14 and the first-type separator coating layer described in FIG. 15. The separator coating layer 2 may correspond to the second-type separator coating layer described in FIG. 13 to FIG. 15.

### Embodiment 8

Embodiment 8 may be applied to a winding pouch cell 466082 (where a height is 46 mm, a width is 60 mm, and a length is 82 mm) with a capacity of 4.2 Ah and a working voltage range of 3.0 V to 4.48 V

The battery includes a base separator with a thickness of 4.5 µm and a material of polyethylene, and a porosity of the base separator is 40.0%. The battery further includes a separator coating layer 1 adhered to an edge region of the base separator, and a separator coating layer 2 adhered to a middle region of the base separator. Both the separator coating layer 1 and the separator coating layer 2 may be coated on two surfaces of the base separator in a machine direction TD. A width of the separator coating layer 1 may be 1.5 mm. Both the separator coating layer 1 and the separator coating layer 2 include an adhesive polymer, and the separator coating layer 2 further includes a ceramic coating layer. In the separator coating layer 2, a ratio of the adhesive polymer to the ceramic coating layer is 6:4. A mass content of the separator coating layer on a single side is 0.54 g/m². The separator coating layer 1 may correspond to the third-type separator coating layer described in FIG. 13 and FIG. 14 and the first-type separator coating layer described in FIG. 15. The separator coating layer 2 may correspond to the second-type separator coating layer described in FIG. 13 to FIG. 15.

For example, a method for configuring a slurry for the separator coating layer 1 may include the following: A raw material of the coating layer is obtained based on a mass proportion, where boehmite occupies 30.9 portions, deionized water occupies 46 portions, an adhesive occupies 20.6 portions, a water-based wetting agent occupies 1.0 portion, and a water-based dispersant occupies 1.5 portions. Then, the boehmite is added to the deionized water to disperse at a high speed in a high-speed dispersing machine, to obtain slurry dispersing liquid, where a specific rotation speed may be, for example, 15000 r/min, and dispersing duration may be, for example, 2h. Afterwards, the completely dissolved water-based dispersant, water-based wetting agent, and PVDF powder are added and are fully stirred and ground, where stirring and grinding duration may be, for example, 3h. Finally, vacuumization and defoaming are performed to obtain a uniformly mixed slurry for the third-type separator coating layer.

A method for configuring a slurry for the separator coating layer 2 may include the following: A raw material of the coating layer is obtained based on a mass proportion, where polyvinylidene difluoride-hexafluoropropylene occupies 51.5 portions, deionized water occupies 46 portions, a water-based wetting agent occupies 1.0 portion, and a water-based dispersant occupies 1.5 portions. Then, the boehmite is added to the deionized water to disperse at a high speed in a high-speed dispersing machine, to obtain slurry dispersing liquid, where a specific rotation speed may be, for example, 15000 r/min, and dispersing duration may be, for example, 2h. Afterwards, the completely dissolved water-based dispersant, water-based wetting agent, and PVDF powder are added and are fully stirred and ground, where stirring and grinding duration may be, for example, 3h. Finally, vacuumization and defoaming are performed to obtain a uniformly mixed slurry for the third-type separator coating layer.

To compare technical effects of the foregoing embodiments, the following provides several methods for testing battery performance.

### Energy density test method:

A battery is placed in a 25°C constant-temperature chamber to stand still for 30 minutes, and the battery is charged in a standard charging mode. After the battery is fully charged, the battery is discharged to a lower limit voltage based on a 0.2C discharging specification, and discharge energy of the battery is recorded. Energy density of the battery may be calculated according to the following formula: energy density=discharge energy/(battery length*battery width *battery thickness).

### Nail penetration test method:

After a battery is fully charged in a standard charging mode, a nail penetration test is performed on the battery in 12h to 24h. For example, the battery is placed in a 25°C explosion-proof box, a steel nail is penetrated into a center of a cell at a speed of 150 mm/s until the steel nail penetrates through the cell, the steel nail is kept for 10 min and then is removed, and a test pass rate is recorded. The nail penetration test method can reflect performance of the battery in a mechanical abuse scenario.

### Hot box test method:

After a battery is fully charged in a standard charging mode, a hot box test is performed on the battery in 12h to 24h. For example, a convective hot air box or a circulating hot air box is used to heat the battery from an initial temperature (25±3)°C, and a temperature rises to (135±2)°C or (150±2)°C, where a temperature change rate is (5±2)°C/min. After the temperature reaches (135±2)°C or (150±2)°C, the temperature is kept for 30 min, and a test pass rate is recorded. The hot box test can reflect performance of the battery in a heat abuse scenario.

After the test ends, the battery is disassembled in a drying room, a width and a length of a separator are tested, and tested values are compared with initial values and are given.

Test results of the foregoing embodiments are shown in Table 1 and Table 2.

**Table 1**

| Embodiment | 1 | 2 | 3 | 4 |
|---|---|---|---|---|
| 0.2C energy density Wh/L | 651.2 | 318.4 | 658.2 | 650.0 |
| 100% SOC nail penetration | 0/5 pass | 0/5 pass | 0/5 pass | 5/5 pass |
| Hot box at 135 degrees for 30 min | 0/5 pass | 0/5 pass | 2/5 pass | 5/5 pass |
| Separator shrinkage rate in a hot box at 135 degrees for 30 min | TD: 6.3% | TD: 4.9% | TD: 1.5% | TD: 0.98% |
| | MD: 6.6% | MD: 8.2% | MD: 6.6% | MD: 5.0% |
| Hot box at 150 degrees for 30 min | 0/5 pass | 0/5 pass | 2/5 pass | 3/5 pass |
| Separator shrinkage rate after a heat box test at 150°C for 30 min | TD: 9.75% | TD: 7.8% | TD: 2.75% | TD: 2.75% |
| | MD: 15.5% | MD: 16.5% | MD: 9.8% | MD: 7.8% |

**Table 2**

| Embodiment | 5 | 6 | 7 | 8 |
|---|---|---|---|---|
| 0.2C energy density Wh/L | 315 | 652.0 | 712 | 718.4 |
| 100% SOC nail penetration | 5/5 pass | 5/5 pass | 5/5 pass | 5/5 pass |
| Hot box at 135 degrees for 30 min | 5/5 pass | 3/5 pass | 5/5 pass | 5/5 pass |
| Separator shrinkage rate in a hot box at 135 degrees for 30 min | TD: 0.45% | TD: 0.78% | TD: 0.66% | TD: 0.76% |
| | MD: 5.8% | MD: 5.5% | MD: 6.75% | MD: 7.6% |
| Hot box at 150 degrees for 30 min | 3/5 pass | 4/5 pass | 3/5 pass | 3/5 pass |
| Separator shrinkage rate after a heat box test at 150°C for 30 min | TD: 1.02% | TD: 1.75% | TD: 1.32% | TD: 1.45% |
| | MD: 12.0% | MD: 8.8% | MD: 8.2% | MD: 8.55% |

It can be learned from the test results that the solutions provided in the embodiments of this application help improve a pass rate of the 100% SOC nail penetration test and the 150°C/30 min hot box test.

In addition, compared with Embodiment 2, a separator coating layer including an adhesive polymer is disposed in both an edge region and a middle region, which helps improve adhesive performance of the middle region, improve dynamics performance of the battery, and reduce a possibility of cell deformation. In addition, the adhesive polymer further helps form a hole, which increases a remained electrolyte, thereby helping improve cycle performance of the battery, and reduces a growth rate of a battery thickness. For example, after 300 cycles, the growth rate of the battery thickness is 4.8% or less.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A battery, comprising:
a first electrode plate;
a first base separator and a second base separator, wherein the first base separator and the second base separator are two base separators adjacent to the first electrode plate, and the first base separator and the second base separator are respectively located on two sides of the first electrode plate; and
a first-type separator coating layer, wherein the first-type separator coating layer is adhered to a first edge region of the first base separator and is adhered to a second edge region of the second base separator, the first edge region and the second edge region are located on a same side of the battery, and the first edge region and the second edge region are disposed opposite to each other.

2. The battery according to claim 1, wherein the first-type separator coating layer is further adhered to a side edge of the first electrode plate.

3. The battery according to claim 1 or 2, wherein the battery further comprises a second electrode plate and a third base separator; both the second base separator and the third base separator are adjacent to the second electrode plate; the second base separator is located between the first base separator and the third base separator; the first-type separator coating layer is further adhered to a third edge region of the second base separator, a side edge of the second base separator, and a fourth edge region of the third base separator; the side edge of the second base separator connects the second edge region and the third edge region; and the third edge region and the fourth edge region are disposed opposite to each other and are located on a same side of the battery.

4. The battery according to claim 1 or 2, wherein the battery further comprises a third electrode plate, a fourth base separator, and a fifth base separator; both the fourth base separator and the fifth base separator are adjacent to the third electrode plate; the second base separator is located between the first base separator and the fourth base separator, and the fourth base separator is located between the second base separator and the fifth base separator; the first-type separator coating layer is further adhered to a side edge of the second base separator, a side edge of the fourth base separator, a fifth edge region of the fourth base separator, and a sixth edge region of the fifth base separator; the second edge region, the side edge of the second base separator, the side edge of the fourth base separator, the fifth edge region, and the sixth edge region are all located on a same side of the battery; and the fifth edge region and the sixth edge region are disposed opposite to each other.

5. The battery according to any one of claims 1 to 4, wherein the battery further comprises a second-type separator coating layer, the second-type separator coating layer is adhered to a middle region of the first base separator, the first-type separator coating layer is connected to the second-type separator coating layer, the second-type separator coating layer comprises an adhesive polymer with a first mass content, and the first-type separator coating layer comprises an adhesive polymer with a second mass content, wherein the second mass content is greater than the first mass content.

6. The battery according to claim 5, wherein the second mass content is 0.4 g/m² to 5 g/m².

7. The battery according to claim 5 or 6, wherein a difference between the second mass content and the first mass content is 0.05 g/m² to 4.5 g/m².

8. The battery according to any one of claims 5 to 7, wherein the adhesive polymer comprises at least one of the following: polyvinylidene difluoride, polyhexafluoropropylene, a vinylidene fluoride-hexafluoropropylene copolymer, a vinylidene fluoride-trichloroethylene copolymer, a polyethylene-vinyl acetate copolymer, sodium carboxymethyl cellulose, styrene-butadiene rubber, polyacrylic acid, polyacrylic acid salt, polyacrylate, polyacrylonitrile, polyamide, polyimide, polyethylene oxide, cellulose acetate, cellulose acetate butyrate, cellulose acetate propionate, polyvinylpyrrolidone, polyvinyl acetate, polyvinylether, polymethyl methacrylate, and polytetrafluoroethylene.

9. The battery according to any one of claims 1 to 8, wherein the battery further comprises an electrolyte, a solubility parameter of the first-type separator coating layer is a first solubility parameter, a solubility parameter of the electrolyte is a second solubility parameter, the first solubility parameter is less than or equal to the second solubility parameter, and a difference between the second solubility parameter and the first solubility parameter is less than a preset solubility parameter.

10. The battery according to claim 9, wherein the preset solubility parameter is less than or equal to 5 (J/cm³)^{0.5}.

11. The battery according to any one of claims 1 to 10, wherein a width of the first-type separator coating layer is 0.1% to 45% of a width of the first electrode plate.

12. A battery, comprising:
a first base separator;
a second-type separator coating layer, wherein the second-type separator coating layer is adhered to a middle region of the first base separator, and the second-type separator coating layer comprises an adhesive polymer with a first mass content; and
a third-type separator coating layer, wherein the third-type separator coating layer is adhered to an edge region of the first base separator, the third-type separator coating layer is connected to the second-type separator coating layer, the third-type separator coating layer comprises an adhesive polymer with a second mass content, and the second mass content is greater than the first mass content.

13. The battery according to claim 12, wherein a thickness of the second-type separator coating layer is less than or equal to a minimum thickness of the third-type separator coating layer.

14. The battery according to claim 12 or 13, wherein the second mass content is 0.4 g/m² to 5 g/m².

15. The battery according to any one of claims 12 to 14, wherein a difference between the second mass content and the first mass content is 0.05 g/m² to 4.5 g/m².

16. The battery according to any one of claims 12 to 15, wherein the battery further comprises an electrolyte, a solubility parameter of the third-type separator coating layer is a first solubility parameter, a solubility parameter of the electrolyte is a second solubility parameter, the first solubility parameter is less than or equal to the second solubility parameter, and a difference between the second solubility parameter and the first solubility parameter is less than a preset solubility parameter.

17. The battery according to claim 16, wherein the preset solubility parameter is less than or equal to 5 (J/cm³)^{0.5}.

18. The battery according to any one of claims 12 to 17, wherein the battery further comprises an electrode plate, and a width of the third-type separator coating layer is 0.1% to 45% of a width of the electrode plate.

19. The battery according to any one of claims 12 to 18, wherein the adhesive polymer comprises at least one of the following: polyvinylidene difluoride, polyhexafluoropropylene, a vinylidene fluoride-hexafluoropropylene copolymer, a vinylidene fluoride-trichloroethylene copolymer, a polyethylene-vinyl acetate copolymer, sodium carboxymethyl cellulose, styrene-butadiene rubber, polyacrylic acid, polyacrylic acid salt, polyacrylate, polyacrylonitrile, polyamide, polyimide, polyethylene oxide, cellulose acetate, cellulose acetate butyrate, cellulose acetate propionate, polyvinylpyrrolidone, polyvinyl acetate, polyvinylether, polymethyl methacrylate, and polytetrafluoroethylene.

20. An electronic device, comprising the battery according to any one of claims 1 to 19.

21. A mobile apparatus, comprising the battery according to any one of claims 1 to 19.
